(19) Europäisches Patentamt
European Patent Office
Office européen des brevets

(11) **EP 2 431 684 B1**

(12) **EUROPEAN PATENT SPECIFICATION**

(45) Date of publication and mention
of the grant of the patent:
**15.04.2020 Bulletin 2020/16**

(51) Int Cl.:
*F25B 1/00* *(2006.01)*    *F25B 29/00* *(2006.01)*
*F25B 25/00* *(2006.01)*    *F25B 13/00* *(2006.01)*

(21) Application number: **09844609.9**

(22) Date of filing: **13.05.2009**

(86) International application number:
**PCT/JP2009/058880**

(87) International publication number:
**WO 2010/131335 (18.11.2010 Gazette 2010/46)**

(54) **AIR CONDITIONING APPARATUS**

KLIMAANLAGENVORRICHTUNG

APPAREIL DE CONDITIONNEMENT D'AIR

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**21.03.2012 Bulletin 2012/12**

(73) Proprietor: **Mitsubishi Electric Corporation Tokyo 100-8310 (JP)**

(72) Inventors:
• **SHIMAZU, Yusuke**
  **Tokyo 100-8310 (JP)**
• **TAKAYAMA, Keisuke**
  **Tokyo 100-8310 (JP)**
• **YAMASHITA, Koji**
  **Tokyo 100-8310 (JP)**

• **MORIMOTO, Hiroyuki**
  **Tokyo 100-8310 (JP)**
• **WAKAMOTO, Shinichi**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
EP-A1- 2 309 194    EP-A1- 2 428 741
JP-A- 3 017 475    JP-A- 3 282 150
JP-A- 4 236 066    JP-A- H0 682 110
JP-A- 10 122 673    JP-A- 2004 053 069
JP-A- 2004 053 069    JP-A- 2004 317 000
JP-A- 2008 209 111    JP-A- 2008 304 149

EP 2 431 684 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an air-conditioning apparatus that efficiently performs cooling and heating using a plurality of loads such as indoor units.

Background Art

Hitherto, an air-conditioning apparatus that performs cooling, heating, and simultaneous cooling and heating requires a cycle that performs cooling and a cycle that performs heating, and therefore requires a number of pipes connected to indoor units, making the apparatus excessively large and intricate. Meanwhile, there is an apparatus in which heating energy and cooling energy are generated simultaneously in a primary cycle, the resulting difference in heat quantity is compensated by an air heat exchanger and a compressor, and the cooling energy and the heating energy are conveyed to a secondary cycle (see Patent Literature 1, for example).
There is another problem in that, in either case of cooling and heating, different temperatures may be required at a time by individual loads (for example, heating air conditioning and floor heating, or perimeter air conditioning and interior air conditioning) and cycles based on separate systems are therefore necessary, making the apparatus excessively large and intricate. Meanwhile, there is an apparatus in which each heat exchanger that exchanges heat between a primary cycle and a secondary cycle is equipped with adjusting valves on the upstream and downstream sides on the primary-refrigerant side thereof so that the pressure and the flow rate during the heat-exchanging operation are adjusted, whereby the primary cycle is established by itself (see Patent Literature 2, for example).
On the other hand, as an energy-saving operation of controlling a secondary cycle, a minimum-resistance control operation is known in which the amount of electricity consumed by a pump that circulates a medium through to indoor units is minimized. In this minimum-resistance control operation, the air-conditioning flow rate of the pump is controlled such that the opening-degree of a control valve provided in a path for supplying the medium to the indoor units becomes the maximum, that is, the pressure loss occurring at the control valve is minimized. Opening-degree-controlling means calculates the required loads of the respective indoor units, or many sensing objects, in all branches. In a case of building air conditioning such as zoning air conditioning in which the number of branches is small in spite of the large scale and the operation pattern is relatively stable, the calculation can be handled even in a strict feedforward control operation (see Patent Literature 3, for example).
JP H06 82110 A discloses a multi-room air-conditioning apparatus. According to this document, a compressor, a first auxiliary heat exchanger for heating, a first control valve to control the capacity of the first auxiliary heat exchanger for heating, a first auxiliary heat exchanger for cooling, a second control valve to control the capacity of the first auxiliary heat exchanger for cooling, a decompressor and a heat source side heat exchanger are connected successively to a three-way valve and the decompressor is made to communicate between the first control valve and the second control valve. A heat source side refrigerant cycle is provided and in the cycle, an evaporation circuit in which one hand of the three-way valve is made to communicate between the first auxiliary heat exchanger for cooling and the compressor is connected to a condensing circuit in which the other hand of the three-way valve is made to communicate between the compressor and the first auxiliary heat exchanger successively. JP2004 053069 A discloses a similar air conditioning apparatus. EP2428741 A1 is a prior right (Art. 54(3) EPC) document not relevant for the assessment of inventive step which also discloses a similar air conditioning apparatus.

Citation List

Patent Literature

Patent Literature 1: Japanese Examined Patent Application Publication No. 59-2832 (pages 2 to 4, and Figs. 2 and 3)
Patent Literature 2: Japanese Unexamined Patent Application Publication No. 2007-183045 (pages 4 to 6 and Fig. 1)
Patent Literature 3: Japanese Unexamined Patent Application Publication No. 2004-317000 (pages 8 to 14 and Fig. 1)

Summary of Invention

Technical Problem

In the known example disclosed by Patent Literature 1, however, when simultaneously generating heating energy and cooling energy on the primary side, since a bypass is provided on the primary side of a heat exchanger provided between the primary cycle and the secondary cycle, the amounts of heating energy and cooling energy generated are adjusted by adjusting the flow rates on the primary side and in the bypass. Therefore, the primary cycle is complicated.

Meanwhile, in the known example disclosed by Patent Literature 2, in the heating operation, the higher one of the pressures of the heat exchangers provided between the primary cycle and the secondary cycle is taken as the discharge pressure. Therefore, although there are pressure-increasing operations for the two heat exchangers at different pressures, the operation for the circulation through the heat exchanger at the lower pressure is useless. Moreover, no explicit measures for a case where a plurality of loads are provided are provided.

Meanwhile, in the known example disclosed by Patent Literature 3, control parameters include an adjustment parameter, and air-conditioning units need to be individually adjusted on site in accordance with the pipe lengths and the fan coil capacities thereof. If the personnel in charge of on-site adjustment do not know the specifications of the secondary cycle, it takes more time to perform the adjustment. Moreover, if a plurality of indoor units are provided, it takes a long time to perform strict calculation and inter-device communication, and a costly processing apparatus is necessary. Such a situation may not be completely managed with an inexpensive processing apparatus.

The present invention is made to solve the above problems and to provide an air-conditioning apparatus capable of generating cooling energy, heating energy, and cooling energy and heating energy simultaneously with a simple configuration, and including a primary cycle that generates even cooling energy or heating energy alone in accordance with loads of different types and a secondary cycle that is efficient and is stabilized in a short time even if there are changes in the loads.

Solution to Problem

The present invention is as defined in the appended independent claim. Further implementations are disclosed in the appended dependent claims, the description and the figures. An air-conditioning apparatus according to the present invention includes, inter alia, a first cycle through which a first medium circulates, a second cycle through which a second medium circulates, and a third cycle through which the second medium circulates. The first cycle includes a loop in which a compressor, a first heat exchanger, a first reducing valve, a second heat exchanger in which the first medium circulating through the first cycle and the second medium circulating through the second cycle exchange heat therebetween, a second reducing valve, a third heat exchanger in which the first medium circulating through the first cycle and the second medium circulating through the third cycle exchange heat therebetween, and a flow-path switcher that switches the direction of flow of the first medium between forward and backward directions are sequentially connected to one another with pipes. The second cycle includes the second heat exchanger, a first pump that drives the second medium, a first path that connects the second heat exchanger and the first pump, and at least one first branch path having one end thereof connected to one end of the first path and the other end thereof connected to the other end of the first path. The third cycle includes the third heat exchanger, a second pump that drives the second medium, a second path that connects the third heat exchanger and the second pump, and at least one second branch path having one end thereof connected to one end of the second path and the other end thereof connected to the other end of the second path. Each first branch path and second branch path includes flow-path-switching valves, an indoor unit and a flow-rate-adjusting valve. The flow-path-switching valves have a first flow-path-switching valve that connects each first branch path and second branch path to one ends of the first path and the second path respectively, and that switches so as to communicate with at least one of the second cycle and the third cycle and a second flow-path-switching valve that connects to the other ends of the first path and the second path and that switches so as to communicate with at least one of the second cycle and the third cycle. The apparatus further includes switching-controlling means that switches the flow-path-switching valves such that an indoor unit performing a cooling operation connects to one of the cycles which has one of the second heat exchanger and the third heat exchanger in which the pressure of the first medium thereof is relatively low, and which exchanges heat with the first cycle and such that an indoor unit performing a heating operation connects to one of the cycles which has one of the second heat exchanger and the third heat exchanger in which the pressure of the first medium thereof is relatively high, and which exchanges heat with the first cycle.

Advantageous Effects of Invention

According to the present invention, an efficient supply of heat source is realized with a simple configuration in accordance with various loads requiring heating energy, heating energy at different temperatures, cooling energy, cooling energy at different temperatures, and simultaneous heating energy and cooling energy.

Brief Description of Drawings

[Fig. 1] Fig. 1 is a circuit diagram illustrating the configuration of an air-conditioning apparatus according to Embodiment 1 of the present invention.

[Fig. 2] Fig. 2 is a circuit diagram illustrating an operation of the air-conditioning apparatus according to Embodiment 1 of the present invention.

[Fig. 3] Fig. 3 is a circuit diagram illustrating an operation of the air-conditioning apparatus according to Embodiment 1 of the present invention.

[Fig. 4] Fig. 4 is a circuit diagram illustrating the configuration of an air-conditioning apparatus according to a form of Embodiment 1 of the present invention.

[Fig. 5] Fig. 5 is a circuit diagram illustrating the configuration of an air-conditioning apparatus according to a form of Embodiment 1 of the present invention.

[Fig. 6] Fig. 6 is a schematic diagram illustrating the configuration of the air-conditioning apparatus according to Embodiment 1 of the present invention.

[Fig. 7] Fig. 7 is a flowchart illustrating an operation of a control apparatus 100 according to Embodiment 1 of the present invention.

[Fig. 8] Fig. 8 is a circuit diagram illustrating the configuration of an air-conditioning apparatus according to Embodiment 2 of the present invention.

[Fig. 9] Fig. 9 is a flowchart illustrating an operation of the control apparatus 100 according to Embodiment 2 of the present invention.

Description of Embodiments

Embodiment 1

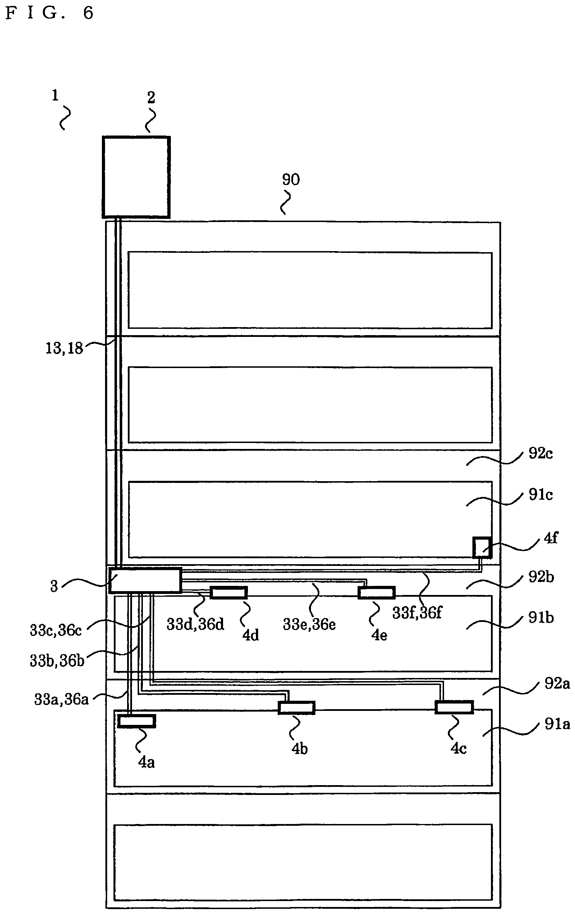

Embodiment 1 of the present invention will now be described. Fig. 6 is a schematic diagram of an air-conditioning apparatus according to Embodiment 1 of the present invention. Reference numeral 90 denotes a building that is an object of air conditioning, the building including living spaces 91a to c and non-living spaces 92a to c. An air-conditioning apparatus 1 includes a heat source unit 2, a relay unit 3, and load units 4a to 4f. The heat source unit 2 and the relay unit 3 are connected to each other with two pipes, which are a first extension pipe 13 and a second extension pipe 18, whereby a first cycle 5 is formed. The relay unit 3 and each of the load units 4a to 4f are connected to each other with two pipes, which are a corresponding one of third extension pipes 33a to f and a corresponding one of fourth extension pipes 36a to f, whereby a second cycle 6 or a third cycle 7 is formed. The heat source unit 2 is provided in a machine room on the rooftop, on the outside, in the basement, or so forth in the building. The load units 4a to f are in or near rooms. The relay unit 3 may be provided near the rooms as illustrated in Fig. 6 or may be provided next to the heat source unit 2.

Thus, unlike a chiller, the air-conditioning apparatus 1 does not include many pipes and is not intricate. Therefore, air conditioning can be controlled easily, and installation work and adjustment can be performed easily.

Furthermore, by utilizing different media such that a second medium filling the second cycle and the third cycle abutting the room spaces is water or brine and a first medium filling the first cycle not abutting the room spaces is carbon dioxide, even if a leakage of the medium should occur, the probability of the occurrence of adverse influence is low. Even if the first medium is a flammable refrigerant that contains a refrigerant having a low GWP (global warming potential), the same effect is provided. Furthermore, in the present embodiment, since there are a plurality of cycles and a plurality of media, the amount of the first medium to be filled is smaller than in a case of a direct-expansion air-conditioning apparatus that includes one cycle filled with one medium. In a case where the first medium is a fluorocarbon refrigerant having, in general, a high ozone depletion potential, even if the first medium should leak, the amount to be filled is small and the degree of adverse influence on the environment is therefore low.

Furthermore, a flow-path-switching mechanism, which is in the form of a so-called four-way valve, may include a plurality of components. For example, any mechanism such as a flow-path-switching mechanism including a combination of four openable/closable valves or a flow-path-switching mechanism including a combination of two three-way valves is acceptable, as long as the mechanism has a function of switching flow paths.

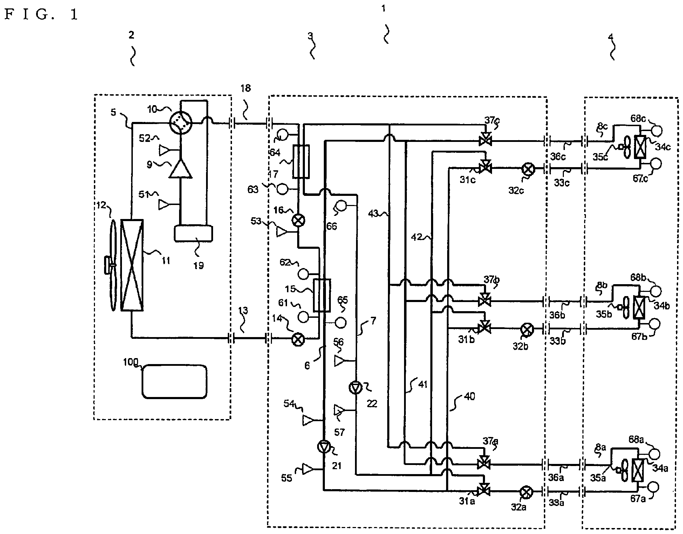

Fig. 1 is a circuit diagram of the air-conditioning apparatus according to Embodiment 1 of the present invention.

Furthermore, the air-conditioning apparatus 1 includes the first cycle 5 through which the first medium circulates, the second cycle 6 through which the second medium circulates, and the third cycle 7 through which the second medium circulates. The first medium is carbon dioxide. The second medium is water, water with an additive such as an antiseptic substance, or brine.

The first cycle 5 is configured such that a compressor 9, a flow-path switcher 10, a first heat exchanger 11 and a fan 12 provided thereto, the first extension pipe 13, a first reducing valve 14, a second heat exchanger 15, a second reducing valve 16, a third heat exchanger 17, the second extension pipe 18, the flow-path switcher 10, an accumulator 19, and the compressor 9 are sequentially connected to one another. The second cycle 6 is configured such that the second heat exchanger 15, a first pump 21, a first branching path 40, a plurality of branch paths 8a to 8c, a first combining path 41, and the second heat exchanger 15 are sequentially connected to one another. The third cycle 7 is configured such that the third heat exchanger 17, a second pump 22, a second branching path 42, the plurality of branch paths 8a to 8c, a second combining path 43, and the third heat exchanger 17 are sequentially connected to one another. The plurality of branch paths 8a to 8c include first flow-path-switching valves 31a to 31c, flow-rate-adjusting valves 32a to 32c, the third extension pipes 33a to 33c, indoor units 34a to 34c and indoor-unit fans 35a to 35c provided thereto, the fourth extension pipes 36a to 36c, and second flow-path-switching valves 37a to 37c. Reference numerals 51 to 57 denote pressure sensors, and reference numerals 61 to 66, 67a to 67c, and 68a to 68c denote temperature sensors.

Note that a control apparatus 100 functions as compressor-rotation-speed-controlling means that controls the rotation speed of the compressor 9; fan-rotation-speed-controlling means that controls the rotation speeds of the fan provided to the first heat exchanger 11 and the indoor-unit fans 35a to 35c provided to the indoor units 34a to 34c; switching-controlling means that controls the switching of the flow-path switcher 10, the first flow-path-switching valves 31a to 31c, and the second flow-path-switching valves 37a to 37c; flow-rate-adjusting means that adjusts the flow rates of the first reducing valve 14 and the second reducing valves 32a to 32c; and rotation-speed-controlling means that controls the rotation speeds of the first pump 21 and the second pump 22.

Next, an operation according to Embodiment 1 will be described.

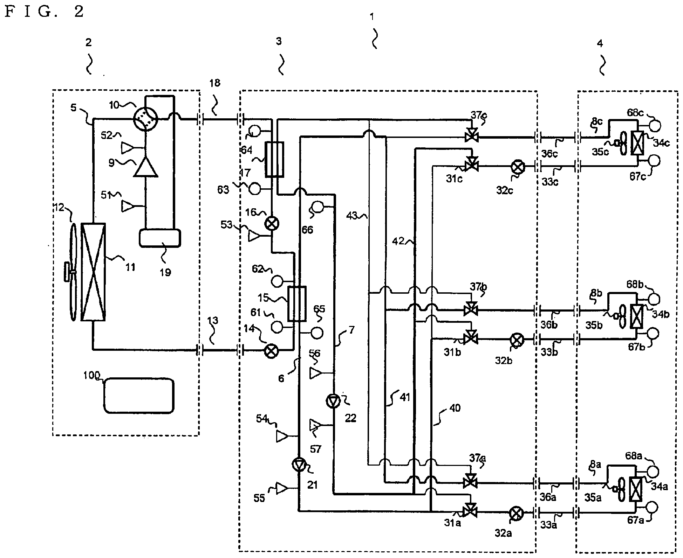

Fig. 2 is a circuit diagram illustrating an operation of the air-conditioning apparatus according to Embodiment 1 of the present invention, in which the circuit illustrated by bold lines represents a circuit through which the second refrigerant flows, and the circuit illustrated by thin lines represents a line through which the second refrigerant does not flow (a non-connected line).

The operation according to Embodiment 1 will be described for the following six different cases:

(1) A case of a cooling-only operation, (2) a case of a cooling-only operation at different required temperatures, (3) a case of a cooling-main operation, (4) a case of a heating-only operation, (5) a case of a heating-only operation at different required temperatures, and (6) a case of a heating- main operation.

(1) Case of Cooling-Only Operation

A case of a cooling-only operation will now be described with reference to Fig. 2.

In the air-conditioning apparatus 1, the flow-path switcher 10 is connected on the solid-line side. The first medium compressed by the compressor 9 and thus having a high pressure and a high temperature flows through the flow-path switcher 10 into the first heat exchanger 11, and dissipates the heat thereof into the outside air supplied by the fan 12, whereby the first medium comes to have a high pressure and a low temperature. The first medium flows through the first extension pipe 13, and the pressure thereof is reduced by the first reducing valve 14, whereby the first medium comes to have a low pressure and a low degree of dryness. The first medium further flows sequentially through the second heat exchanger 15, the second reducing valve 16, and the third heat exchanger 17. The second reducing valve 16 is fully open, and the pressure loss is small. Furthermore, in the second heat exchanger 15, since heat is exchanged between the first cycle 5 and the second cycle 6, the first medium supplies the cooling energy thereof to the second medium. In the third heat exchanger 17, since heat is exchanged between the first cycle 5 and the third cycle 7, the first medium supplies the cooling energy thereof to the second medium. Thus, the first medium evaporates and comes to have a low pressure and a high degree of dryness, or becomes a low-pressure superheated gas. Then, the first medium sequentially flows through the second extension pipe 18, the flow-path switcher 10, and the accumulator 19, and returns to the compressor 9.

Here, the control apparatus 100 operates as follows. The control apparatus 100 controls the rotation speed of the compressor 9 such that the pressure in the intake-side pressure sensor 51 becomes constant.

The control apparatus 100 also controls the rotation speed of the outdoor-unit fan 12 such that the pressure at the discharge-side pressure sensor 52 becomes constant. Thus, the processing capacity of the first heat exchanger 11 is appropriately controlled.

The control apparatus 100 also controls the opening-degree of the first reducing valve 14 such that the result of Equation (1) below becomes constant.

$$\text{(Exit superheat) of third heat exchanger } 17 = \text{(Detected value of}$$

$$\text{temperature sensor } 64) - \text{(Reduced saturation temperature at intake-side pressure}$$

$$\text{sensor } 51) \cdots (1)$$

The control apparatus 100 also makes the opening-degree of the second reducing valve 16 fully open. Thus, an appropriate cooling capacity is realized in accordance with the number of operating indoor units 34.

The control apparatus 100 also controls the opening-degree of the flow-rate-adjusting valves 32a to 32c such that the result of Equation (2) below becomes constant.

$$\text{(Temperature difference between entrance and exit) of indoor unit } 34 =$$

$$\text{(Detected value of temperature sensor } 67) - \text{(Detected value of temperature sensor}$$

$$68) \cdots (2)$$

The control apparatus 100 also controls the rotation speed of the first pump 21 such that the result of Equation (3) below becomes constant.

$$\text{(First pressure difference)} = \text{(Detected value of pressure sensor } 55) -$$

$$\text{(Detected value of pressure sensor } 54) \cdots (3)$$

The control apparatus 100 further controls the rotation speed of the second pump 22 such that the result of Equation (4) below becomes constant.

$$\text{(Second pressure difference)} = \text{(Detected value of pressure sensor } 57)$$

$$- \text{(Detected value of pressure sensor } 56) \cdots (4)$$

Thus, the second medium can be made to appropriately circulate through the indoor units 34a to 34c.

In the second cycle 6 to which cooling energy has been supplied from the first cycle 5 in the second heat exchanger 15, the second medium has a low temperature, is circulated by the first pump 21, and is allowed to flow into the branch paths 8a and 8b by the first flow-path-switching valves 31a and 31b. In the branch paths 8a and 8b, the flow rates of the second medium that is to flow therethrough are determined by the levels of resistances at the flow-rate-adjusting valves 32a and 32b. Subsequently, the second medium flows through the third extension pipes 33a and 33b into the indoor units 34a and 34b. In the indoor units 34a and 34b, the second medium supplies the cooling energy thereof to the load side by exchanging heat with the room air with the aid of the indoor-unit fans 35a and 35b, whereby the second medium comes to have a high temperature. Subsequently, the second medium flows through the fourth extension pipes 36a and 36b and the second flow-path-switching valves 37a and 37b, is combined into the first combining path 41, and returns to the second heat exchanger 15.

In the third cycle 7 to which cooling energy has been supplied from the first cycle 5 in the third heat exchanger 17, the second medium has a low temperature, is circulated by the second pump 22, and is allowed to flow into the branch path 8c by the first flow-path-switching valve 31c. In the branch path 8c, the flow rate of the second medium that is to flow therethrough is determined by the level of resistance at the flow-rate-adjusting valve 32c. Subsequently, the second medium flows through the third extension pipe 33c into the indoor unit 34c. In the indoor unit 34c, the second medium supplies the cooling energy thereof to the load side by exchanging heat with the room air with the aid of the indoor-unit fan 35c, whereby the second medium comes to have a high temperature. Subsequently, the second medium flows through the fourth extension pipe 36c and the second flow-path-switching valve 37c, and returns to the third heat exchanger 17.

If there are any nonoperating indoor units 34, the control apparatus 100 fully closes the flow-rate-adjusting valves 32 in the branch paths 8 having the nonoperating indoor units 34, or switches the flow-path-switching valves 31 and 37 so as not to be connected to either of the second cycle 6 and the third cycle 7.

Next, the operation of controlling the pump performed by the control apparatus 100 will be described in detail. If the required capacity of the air-conditioning apparatus has been determined, the required flow rate of the second medium is determined, and the flow rate of the pump is determined. However, unless the pump head is minimized, the pump input becomes larger than necessary, and the cooling/heating efficiency of the air-conditioning apparatus is reduced. Particularly, in building air conditioning, this is more pronounced in an air-conditioning apparatus having a small required capacity. To minimize the head, however, it is important in terms of minimizing the control operation to identify the flow-path resistances in a plurality of intricate branch paths (including the extension pipes 33 and 36 and the indoor units 34) provided in the case of building air conditioning or the like.

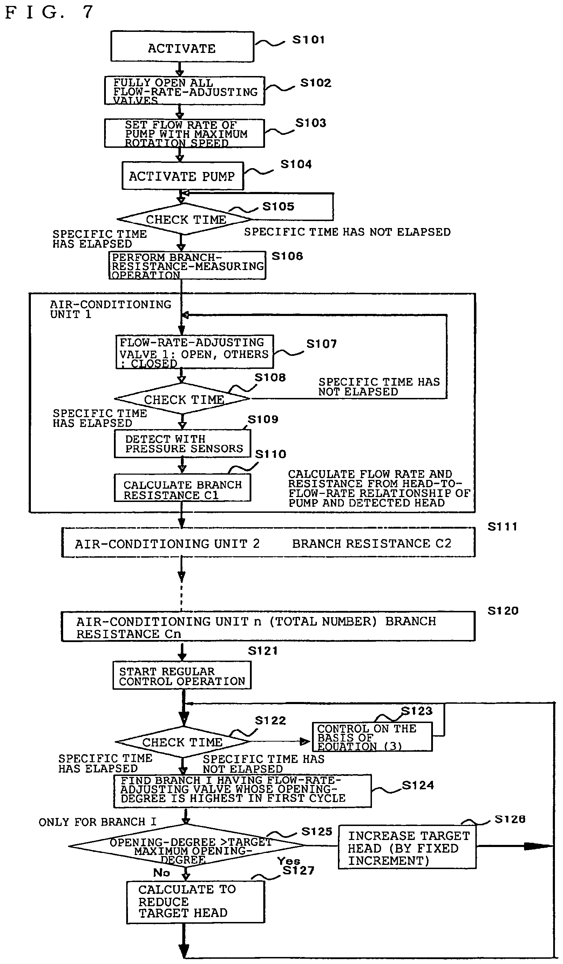

Fig. 7 is a flowchart illustrating the operational flow of the control apparatus 100 according to Embodiment 1. When the control apparatus 100 is first activated in Step S101, the control apparatus 100 fully opens all flow-rate-adjusting valves 32 in Step S102. Subsequently, the control apparatus 100 sets the rotation speed of the pump to the maximum in Step S103 and activates the pump in Step S104. Subsequently, after a specific period of time, which is a short time, has elapsed in Step S105, the control apparatus 100 starts a branch-resistance-measuring operation in Step S106. First, the control apparatus 100 performs the branch-resistance-measuring operation for a first indoor unit 34. That is, in Step S107, the control apparatus 100 opens the flow-path-switching valves 31 and 37 for the first indoor unit 34 and closes the flow-path-switching valves 31 and 37 for the other indoor units 34 excluding those for the first indoor unit 34, thereby allowing the second medium to flow only into the first indoor unit 34. After a specific period of time has elapsed in Step S108, the control apparatus 100 acquires the detected values of the pressure sensors 54 to 57 in Step S109 and calculates the flow-path resistance of a first branch path in Step S110. In this calculation, the current flow rate is identified from the correlation equation between the head and flow rate of the pump, which is known in advance from the design, and from the head, whereby the flow-path resistance of the first branch path is calculated.

Subsequently, the control apparatus 100 performs the same operation for a second first indoor unit 34 in Step S111 so as to calculate the flow-path resistance of a second branch path.

Furthermore, the control apparatus 100 repeats the same operation, including the operation for the last (n-th) indoor unit 34 in Step S120 so as to calculate the flow-path resistance of an n-th branch path, whereby the required capacities of all indoor units 34 are calculated. Accordingly, the flow rate of the pump is determined from the required capacities of all indoor units 34.

Note that while Fig. 7 illustrates the case where the flow-path resistances of all branch paths are calculated by the first pump 21 alone, the calculation may be performed by dividing the group of branch paths between the first pump 21 and the second pump 22. In that case, the identification time can be shortened.

Subsequently, in Step S121, the control apparatus 100 starts a regular control operation and the operation of the first cycle 5. Subsequently, in Step S122, the control apparatus 100 judges whether or not a specific period of time has elapsed, and, if not, the control apparatus 100 controls the rotation speed of the pump in Step S123 such that the target head is realized on the basis of Equation (3). If the specific period of time has elapsed in Step S122, the control apparatus 100 finds in Step S124 the branch path (herein denoted by I) having the flow-rate-adjusting valve 32 whose opening-degree is the highest in the second cycle 6. If the opening-degree of the branch path I is at or above the target maximum opening-degree in Step S125, the control apparatus 100 increases the target head in Step S126 because the head of the pump is low. The increment may be a fixed value. If the opening-degree of the branch path I is below the target maximum opening-degree in Step S125, the control apparatus 100 reduces the target head in Step S127 because the head of the pump is too high. The reduction method is as follows:

$$\text{(New target head)} = \text{(Current target head)}/\text{(Calculated flow-path resistance of relevant branch path)} \times ((\text{Calculated flow-path resistance of relevant branch path}) - ((\text{Flow-path resistance of flow-rate-adjusting valve at current opening-degree}) - (\text{Flow-path resistance of flow-rate-adjusting valve at target maximum opening-degree})))$$

With such a configuration, no personnel for on-site adjustment are necessary, and minimization of the pump input is realized easily because the control apparatus 100 identifies the flow-path resistances and reflects the resistances in the control operation that is being performed. Furthermore, by reflecting this information in controlling the opening-degrees of the flow-rate-adjusting valves 32 on the basis of Equation (2), the controllability is further stabilized.

Note that while the above description concerns the first pump 21 in the second cycle 6, the same applies to the first pump 22 in the third cycle 7. Furthermore, while one pump is equipped with two pressure sensors on the upstream and downstream sides thereof, the head may be alternatively checked with the pressure sensor on the exit side of the pump because the pressure on the entrance side of the pump does not change substantially. Furthermore, if flow-rate sensors are provided instead of the pressure sensors, the head and the flow-path resistances are obtained from the characteristic between the head and the flow rate of the pump and the detected value of the flow-rate sensor, and the same effect is therefore provided.

Next, control of the flow-path-switching valves 31 performed by the control apparatus 100 will be further described. The indoor units 34 are all performing a cooling operation, and the first medium flows through the second heat exchanger 15 and thus comes to have a low pressure and two phases (a low pressure and a low degree of dryness), as described above. Subsequently, the first medium flows through the third heat exchanger 17 and thus becomes a low-pressure superheated gas having an (exit superheat). Since the heat transfer characteristic is superior in the two-phase state than in the superheated-gas state, the second heat exchanger 15 has higher heat exchangeability than the third heat exchanger 17. Therefore, if an indoor unit 34 having a relatively large capacity is connected to the second cycle 6 (the second heat exchanger 15), the capacity is exerted without excess or loss. In a relevant branch path, the control apparatus 100 switches the first flow-path-switching valve 31 to open so as to be connected to the first branching path 40 and to closed so as not to be connected to the second branching path 42, and switches the second flow-path-switching valve 37 to open so as to be connected to the first combining path 41 and to closed so as not to be connected to the second combining path 43.

Furthermore, in an indoor unit 34 connected to a flow-rate-adjusting valve 32 whose opening-degree is high, the flow rate of the second medium is high, and a large capacity is therefore required. Accordingly, such an indoor unit 34 connected to a flow-rate-adjusting valve 32 whose opening-degree is high is preferably connected to the second cycle 6 (the second heat exchanger 15), and the relevant first flow-path-switching valve 31 and second flow-path-switching valve 37 are to be controlled as described above.

(2) Case of Cooling-Only Operation at Different Required Temperatures

A case of a cooling-only operation at different required temperatures will now be described with reference to Fig. 2.

In the air-conditioning apparatus 1, the flow-path switcher 10 is connected on the solid-line side. The first medium compressed by the compressor 9 and thus having a high pressure and a high temperature flows through the flow-path switcher 10 into the first heat exchanger 11, and dissipates heat into the outside air supplied by the fan 12, whereby the first medium turns into high pressure and low temperature stage. The first medium flows through the first extension pipe 13, and the pressure thereof is reduced by the first reducing valve 14, whereby the first medium comes to have a low pressure and a low degree of dryness. The first medium further flows sequentially through the second heat exchanger 15, the second reducing valve 16, and the third heat exchanger 17. In the second reducing valve 16, the pressure of the first medium drops, and the reduced saturation temperatures at the pressures before and after the passage therethrough correspond to the required temperatures. This is because of the following reason. The opening-degree of the second reducing valve 16 and the degrees of drops in the pressure and temperature of the first medium correspond to each other at a ratio of 1 to 1. Hence, if the opening-degree of the second reducing valve is determined, the degrees of drops in the pressure and temperature of the first medium are automatically determined. Therefore, the control apparatus 100 controls the opening-degree of the second reducing valve 16 in accordance with the temperatures required by the indoor units 34, whereby the temperature of the first medium can be adjusted.

Furthermore, in the second heat exchanger 15, since heat is exchanged between the first cycle 5 and the second cycle 6, the first medium supplies the cooling energy thereof to the second medium. In the third heat exchanger 17, since heat is exchanged between the first cycle 5 and the third cycle 7, the first medium supplies the cooling energy thereof to the second medium. Thus, the first medium evaporates and comes to have a low pressure and a high degree of dryness, or becomes a low-pressure superheated gas. Then, the first medium sequentially flows through the second extension pipe 18, the flow-path switcher 10, and the accumulator 19, and returns to the compressor 9.

Here, the control apparatus 100 operates as follows. The control apparatus 100 controls the rotation speed of the compressor 9 such that the pressure at the intake-side pressure sensor 51 becomes constant.

The control apparatus 100 also controls the rotation speed of the outdoor-unit fan 12 such that the pressure at the discharge-side pressure sensor 52 becomes constant. Thus, the processing capacity of the first heat exchanger 11 is appropriately controlled.

The control apparatus 100 also controls the opening-degree of the first reducing valve 14 such that the result of Equation (5) below becomes constant.

$$\text{(Exit superheat) of third heat exchanger 17} = \text{(Detected value of}$$

$$\text{temperature sensor 64)} - \text{(Reduced saturation temperature at intake-side pressure}$$

$$\text{sensor 51)} \cdots \text{(5)}$$

The control apparatus 100 also controls the opening-degree of the second reducing valve 16 such that the result of Equation (6) below becomes the required temperature difference.

$$\text{(Temperature difference)} = \text{(Reduced saturation temperature at}$$

$$\text{pressure sensor 53)} - \text{(Reduced saturation temperature at intake-side pressure}$$

$$\text{sensor 51)} \cdots \text{(6)}$$

Thus, an appropriate cooling capacity is realized in accordance with the number of operating indoor units 34.

Meanwhile, since the second cycle 6 to which cooling energy has been supplied from the first cycle 5 in the second heat exchanger 15 exchanges heat in the second heat exchanger 15 with the first cycle 5 filled with the first medium that is yet to flow through the reducing valve 14 and has a relatively high pressure, the evaporating temperature of the second medium in the second cycle 6 is higher than in the third cycle 7, and the blowoff temperatures of corresponding ones of the indoor units 34 are high.

Furthermore, since the third cycle 7 to which cooling energy has been supplied from the first cycle 5 in the third heat exchanger 17 exchanges heat in the third heat exchanger 17 with the first cycle 5 filled with the first medium that has flowed through the reducing valve 14 and has a relatively low pressure, the evaporating temperature of the second medium in the third cycle 7 is lower than in the second cycle 6, and the blowoff temperatures of corresponding ones of the indoor units 34 are low.

This is because of the following reason. In the cooling operation, since the second heat exchanger 15 in the first cycle 5 is connected on the upstream side with respect to the second reducing valve 16, the first medium flowing through the second heat exchanger 15 has a temperature obtained before the pressure reduction by the second reducing valve 16. In contrast, since the third heat exchanger 17 in the first cycle 5 is connected on the downstream side with respect to the second reducing valve 16, the first medium flowing through the third heat exchanger 17 has a temperature that has dropped after the pressure reduction by the second reducing valve 16. Therefore, the temperature of the first medium in the second heat exchanger 15 is higher than the temperature of the first medium in the third heat exchanger 17. Accordingly, the second medium in the second cycle 6 that has exchanged heat with the first medium in the second heat exchanger 15 has a higher temperature than the second medium in the third cycle 7 that has exchanged heat with the first medium having a lower temperature in the third heat exchanger 17. This is the reason.

Note that if there are any nonoperating indoor units 34, the control apparatus 100 fully closes the flow-rate-adjusting valves 32 in the branch paths having the nonoperating indoor units 34, or switches the flow-path-switching valves 31 and 37 so as not to be connected to either of the second cycle 6 and the third cycle 7.

Here, the control apparatus 100 operates as follows. The control apparatus 100 controls the opening-degrees of the flow-rate-adjusting valves 32a to 32c such that the result of Equation (7) below becomes constant.

$$\text{(Temperature difference between entrance and exit)} = \text{(Detected value}$$

$$\text{of temperature sensor 67)} - \text{(Detected value of temperature sensor 68)} \cdots \text{(7)}$$

The control apparatus 100 also controls the rotation speed of the first pump 21 such that the result of Equation (8) below becomes constant.

$$\text{(First pressure difference)} = \text{(Detected value of pressure sensor 55)} -$$

$$\text{(Detected value of pressure sensor 54)} \cdots \text{(8)}$$

The control apparatus 100 also controls the rotation speed of the second pump 22 such that the result of Equation (9) below becomes constant.

$$\text{(Second pressure difference)} = \text{(Detected value of pressure sensor 57)}$$
$$- \text{(Detected value of pressure sensor 56)} \cdots (9)$$

Thus, the second medium can be made to appropriately circulate through the indoor units 34.

As described above, since cooling energy can be supplied at two different temperatures through the second heat exchanger 15 and the third heat exchanger 17 that are connected in series, the air-conditioning apparatus 1 operates with an increased efficiency without any excessive compressing operation. Furthermore, since cooling energy is supplied at the two different temperatures with one heat source, interior air conditioning and perimeter air conditioning in building air conditioning or the like are realized simultaneously.

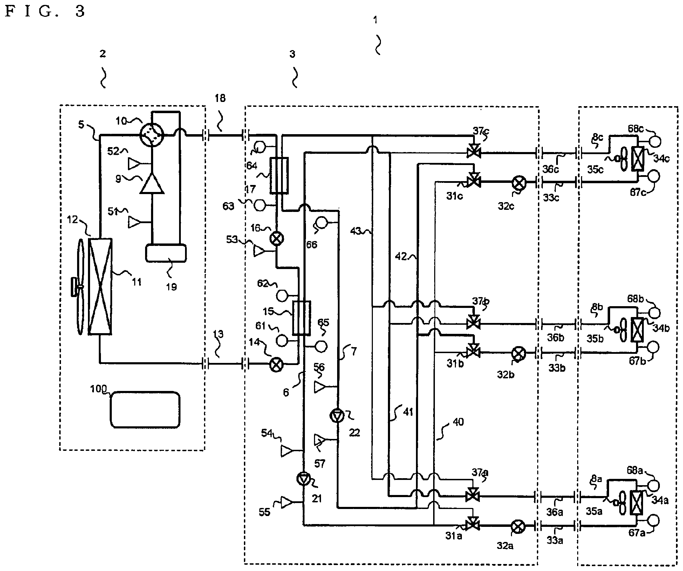

Fig. 3 is a circuit diagram illustrating an operation of the air-conditioning apparatus according to Embodiment 1 of the present invention, in which the circuit illustrated by bold lines represents a circuit through which the second refrigerant flows, and the circuit illustrated by thin lines represents a line through which the second refrigerant does not flow (a non-connected line).

(3) Case of Cooling-Main Cooling/Heating Operation

Now, a "cooling-main operation" in which cooling and heating are performed simultaneously and the cooling capacity is larger than the heating capacity will be described with reference to Fig. 3.

In the air-conditioning apparatus 1, the flow-path switcher 10 is connected on the solid-line side. The first medium compressed by the compressor 9 and thus having a high pressure and a high temperature flows through the flow-path switcher 10 into the first heat exchanger 11, and dissipates the heat thereof into the outside air supplied by the fan 12, whereby the first medium, if the pressure thereof is at or above the critical value, comes to have a high pressure and a medium temperature. The first medium further flows sequentially through the first extension pipe 13, the first reducing valve 14, and the second heat exchanger 15. The first reducing valve 14 is fully open, and the pressure loss is small. Furthermore, in the second heat exchanger 15, since heat is exchanged between the first cycle 5 and the second cycle 6, the first medium supplies the heating energy thereof to the second medium, thereby having a high pressure and a low temperature. Subsequently, the pressure of the first medium is reduced by the second reducing valve 16, and the first medium comes to have a low pressure and a low degree of dryness. Subsequently, when the first medium flows through the third heat exchanger 17, since heat is exchanged between the first cycle and the third cycle, the first medium supplies the cooling energy thereof to the second medium, whereby the first medium evaporates and comes to have a low pressure and a high degree of dryness, or becomes a low-pressure superheated gas. Then, the first medium sequentially flows through the second extension pipe 18, the flow-path switcher 10, and the accumulator 19, and returns to the compressor 9.

Here, the control apparatus 100 operates as follows. The control apparatus 100 controls the rotation speed of the compressor 9 such that the pressure at the intake-side pressure sensor 51 becomes constant, and also controls the rotation speed of the outdoor-unit fan 12 such that the pressure at the discharge-side pressure sensor 52 becomes constant, whereby the processing capacity of the first heat exchanger 11 is controlled.

The control apparatus 100 also makes the opening-degree of the first reducing valve 14 fully open.

The control apparatus 100 also controls the opening-degree of the second reducing valve 16 such that the result of Equation (10) below becomes constant.

$$\text{(Exit superheat) of third heat exchanger 17} = \text{(Detected value of}$$
$$\text{temperature sensor 64)} - \text{(Reduced saturation temperature at intake-side pressure}$$
$$\text{sensor 51)} \cdots (10)$$

Thus, appropriate cooling and heating capacities are realized in accordance with the number of operating indoor units 34.

In the second cycle 6 to which heating energy has been supplied from the first cycle 5 in the second heat exchanger 15, the second medium has a relatively high temperature, is circulated by the first pump 21, and is allowed to flow into the branch path 8a by the first flow-path-switching valve 31a. In the branch path 8a, the flow rate of the second medium that is to flow therethrough is determined by the level of resistance at the flow-rate-adjusting valve 32a.

Subsequently, the second medium flows through the third extension pipe 33a into the indoor unit 34a. In the indoor unit 34a, the second medium supplies the heating energy thereof to the load side by exchanging heat with the room air with the aid of the indoor-unit fan 35a, whereby the second medium comes to have a low temperature. Subsequently, the second medium flows through the fourth extension pipe 36a, the second flow-path-switching valve 37a, and the first combining path 41, and returns to the second heat exchanger 15.

In the third cycle 7 to which cooling energy has been supplied from the first cycle 5 in the third heat exchanger 17, the second medium has a relatively low temperature, is circulated by the second pump 22, and is allowed to flow into the branch paths 8b and 8c by the first flow-path-switching valves 31b and 31c. In the branch paths 8b and 8c, the flow rates of the second medium that is to flow therethrough are determined by the levels of resistances at the flow-rate-adjusting valves 32b and 32c. Subsequently, the second medium flows through the third extension pipes 33b and 33c into the indoor units 34b and 34c. In the indoor units 34b and 34c, the second medium supplies the cooling energy thereof to the load side by exchanging heat with the room air with the aid of the indoor-unit fans 35b and 35c, whereby the second medium comes to have a high temperature. Subsequently, the second medium flows through the fourth extension pipes 36b and 36c and the second flow-path-switching valves 37b and 37c, is combined into the second combining path 43, and returns to the third heat exchanger 17.

As described above, since relatively mild heating energy and relatively strong cooling energy can be supplied from the second heat exchanger 15 and the third heat exchanger 17, respectively, that are connected in series, an efficient cooling/heating operation is realized by connecting some operating indoor units 34 in a relatively small number or having relatively small heating capacities to the second heat exchanger 15 and connecting the other operating indoor units 34 in a relatively large number or having relatively large cooling capacities to the third heat exchanger 17.

(4) Case of Heating-Only Operation

A case of a heating-only operation will now be described with reference to Fig. 2.

In the air-conditioning apparatus 1, the flow-path switcher 10 is connected on the broken-line side. The first medium compressed by the compressor 9 and thus having a high pressure and a high temperature flows through the flow-path switcher 10, the second extension pipe 18, the third heat exchanger 17, the second reducing valve 16, and the second heat exchanger 15. The second reducing valve 16 is fully open, and the loss is small. Furthermore, in the third heat exchanger 17, since heat is exchanged between the first cycle 5 and the third cycle 7, the first medium supplies the heating energy to the second medium. In the second heat exchanger 15, since heat is exchanged with the second cycle 6, the first medium supplies the heating energy to the second medium. Thus, the first medium comes to have a high pressure and a low temperature. By flowing through the first reducing valve 14, the first medium comes to have a low pressure and a low degree of dryness. The first medium flows through the first extension pipe 13 into the first heat exchanger 11, and absorbs heat from the outside air supplied by the fan 12, whereby the first medium comes to have a low pressure and a high degree of dryness. Subsequently, the first medium flows through the flow-path switcher 10 and the accumulator 19, and returns to the compressor 9. In general, in indoor units 34 intended for buildings, the amount of refrigerant is easier to become excessive in the heating operation than in the cooling operation depending on the sizes of the heat exchangers and the arrangement of the extension pipes and the reducing valves. Therefore, by storing this in the accumulator 19, the liquid refrigerant is prevented from being taken into the compressor 9, and the reliability is thus provided.

Here, the control apparatus 100 operates as follows. The control apparatus 100 controls the rotation speed of the compressor 9 such that the pressure at the discharge-side pressure sensor 52 becomes constant, and also controls the rotation speed of the outdoor-unit fan 12 such that the pressure at the intake-side pressure sensor 51 becomes constant, whereby the processing capacity of the first heat exchanger 11 is appropriately controlled.

The control apparatus 100 also makes the opening-degree of the second reducing valve 16 fully open.

The control apparatus 100 also controls the opening-degree of the first reducing valve 14 such that the result of Equation (11) below becomes constant.

(If the detected value of the pressure sensor 51 is at or above the critical pressure of the first medium)
(Exit temperature) of third heat exchanger 17 = (Detected value of temperature sensor 61)
(If the detected value of the pressure sensor 51 is below the critical pressure of the first medium)

$$\text{(Exit subcooling) of third heat exchanger 17} = \text{(Reduced saturation}$$

$$\text{temperature at discharge-side pressure sensor 52)} - \text{(Detected value of}$$

$$\text{temperature sensor 61)} \cdots (11)$$

Thus, an appropriate heating capacity is realized in accordance with the number of operating indoor units 34.

In the third cycle 7 to which heating energy has been supplied from the first cycle 5 in the third heat exchanger 17, the second medium has a high temperature, is circulated by the second pump 22, and is allowed to flow into the branch path 8c by the first flow-path-switching valve 31c. In the branch path 8c, the flow rate of the second medium that is to flow therethrough is determined by the level of resistance at the flow-rate-adjusting valve 32c. Subsequently, the second medium flows through the third extension pipe 33c into the indoor unit 34c. In the indoor unit 34c, the second medium supplies the heating energy thereof to the load side by exchanging heat with the room air with the aid of the indoor-unit fan 35c, whereby the second medium comes to have a low temperature. Subsequently, the second medium flows through the fourth extension pipe 36c and the second flow-path-switching valve 37c, and returns to the third heat exchanger 17.

In the second cycle 6 to which heating energy has been supplied from the first cycle 5 in the second heat exchanger 15, the second medium has a high temperature, is circulated by the first pump 21, and is allowed to flow into the branch paths 8a and 8b by the first flow-path-switching valves 31a and 31b. In the branch paths 8a and 8b, the flow rates of the second medium that is to flow therethrough are determined by the levels of resistances at the flow-rate-adjusting valves 32a and 32b. Subsequently, the second medium flows through the third extension pipes 33a and 33b into the indoor units 34a and 34b. In the indoor units 34a and 34b, the second medium supplies the heating energy thereof to the load side by exchanging heat with the room air with the aid of the indoor-unit fans 35a and 35b, whereby the second medium comes to have a low temperature. Subsequently, the second medium flows through the fourth extension pipes 36a and 36b and the second flow-path-switching valves 37a and 37b, is combined into the first combining path 41, and returns to the second heat exchanger 15.

If there are any nonoperating indoor units 34, the control apparatus 100 fully closes the flow-rate-adjusting valves 32 in the branch paths 8 having the nonoperating indoor units 34, or switches the flow-path-switching valves 31 and 37 so as not to be connected to either of the second cycle 6 and the third cycle 7.

Here, the control apparatus 100 operates as follows. The control apparatus 100 controls the opening-degrees of the flow-rate-adjusting valves 32a to 32c such that the result of Equation (12) below becomes constant.

$$\text{(Temperature difference between entrance and exit)} = \text{(Detected value of temperature sensor 67)} - \text{(Detected value of temperature sensor 68)} \cdots (12)$$

The control apparatus 100 also controls the rotation speed of the first pump 21 such that the result of Equation (13) below becomes constant.

$$\text{(First pressure difference)} = \text{(Detected value of pressure sensor 55)} - \text{(Detected value of pressure sensor 54)} \cdots (13)$$

The control apparatus 100 also controls the rotation speed of the second pump 22 such that the result of Equation (14) below becomes constant.

$$\text{(Second pressure difference)} = \text{(Detected value of pressure sensor 57)} - \text{(Detected value of pressure sensor 56)} \cdots (14)$$

Thus, the second medium can be made to appropriately circulate through the indoor units 34.

(5) Case of Heating-Only Operation at Different Required Temperatures

A case of a heating-only operation at different required temperatures will now be described with reference to Fig. 3.

In the air-conditioning apparatus 1, the flow-path switcher 10 is connected on the broken-line side. The first medium compressed by the compressor 9 and thus having a high pressure and a high temperature sequentially flows through the flow-path switcher 10, the second extension pipe 18, the third heat exchanger 17, the second reducing valve 16, and the second heat exchanger 15. In the second reducing valve 16, the pressure drops, and the reduced saturation temperatures at the pressures before and after the passage therethrough correspond to the required temperatures.

Furthermore, in the third heat exchanger 17, since heat is exchanged between the first cycle 5 and the third cycle 7, the first medium supplies the heating energy thereof to the second medium. In the second heat exchanger 15, since heat is exchanged between the first cycle 5 and the second cycle 6, the first medium supplies the heating energy thereof to the second medium. Thus, the first medium comes to have a high pressure and a low temperature. The first medium further flows through the first reducing valve 14, thereby having a low pressure and a low degree of dryness. The first medium flows through the first extension pipe 13 into the first heat exchanger 11, and absorbs heat from the outside air supplied by the fan 12 in the first heat exchanger 11, whereby the first medium comes to have a low pressure and a high degree of dryness. Subsequently, the first medium flows through the flow-path switcher 10 and the accumulator 19, and returns to the compressor 9. In general, in indoor units 34 intended for buildings, the amount of refrigerant is easier to become excessive in the heating operation than in the cooling operation depending on the sizes of the heat exchangers and the arrangement of the extension pipes and the reducing valves. Therefore, by storing this in the accumulator 19, the liquid refrigerant is prevented from being taken into the compressor, and the reliability is thus provided.

Here, the control apparatus 100 operates as follows. The control apparatus 100 controls the rotation speed of the compressor 9 such that the pressure at the discharge-side pressure sensor 52 becomes constant.

The control apparatus 100 also controls the rotation speed of the outdoor-unit fan 12 such that the pressure at the intake-side pressure sensor 51 becomes constant. Thus, the processing capacity of the first heat exchanger 11 is controlled.

The control apparatus 100 also controls the opening-degree of the second reducing valve 16 such that the result of Equation (15) below becomes the required temperature difference.

(If the detected value of the pressure sensor 51 is at or above the critical pressure of the first medium)

$$\text{(Pressure difference)} = \text{(Detected value of discharge-side pressure sensor 52)} - \text{(Detected value of pressure sensor 53)}$$

(If the detected value of the pressure sensor 51 is below the critical pressure of the first medium)

$$\text{(Temperature difference)} = \text{(Reduced saturation temperature at discharge-side pressure sensor 52)} - \text{(Reduced saturation temperature at pressure sensor 53)} \cdots (15)$$

The control apparatus 100 also controls the opening-degree of the first reducing valve 14 such that the result of Equation (16) below becomes constant.

(If the detected value of the pressure sensor 51 is at or above the critical pressure of the first medium)
(Exit temperature) of third heat exchanger 17 = (Detected value of temperature sensor 61)
(If the detected value of the pressure sensor 51 is below the critical pressure of the first medium)

$$\text{(Exit subcooling) of third heat exchanger 17} = \text{(Reduced saturation temperature at discharge-side pressure sensor 52)} - \text{(Detected value of temperature sensor 61)} \cdots (16)$$

Thus, an appropriate heating capacity is realized in accordance with the number of operating indoor units 34.

Meanwhile, since the third cycle 7 to which heating energy has been supplied from the first cycle 5 in the third heat exchanger 17 exchanges heat in the third heat exchanger 17 with the first cycle 5 filled with the first medium that is yet to flow through the reducing valve 14 and has a relatively high pressure, the evaporating temperature of the second medium in the third cycle 7 is higher than in the second cycle 6, and the blowoff temperatures of corresponding ones of the indoor units 34 are high.

Furthermore, since the second cycle 6 to which heating energy has been supplied from the first cycle 5 in the second heat exchanger 15 exchanges heat in the second heat exchanger 15 with the first cycle 5 filled with the first medium that has flowed through the reducing valve 14 and has a relatively low pressure, the evaporating temperature of the second medium in the second cycle 6 is lower than in the third cycle 7, and the blowoff temperatures of corresponding ones of the indoor units 34 are low.

This is because of the following reason. In the heating operation, since the third heat exchanger 17 in the first cycle 5 is connected on the upstream side with respect to the second reducing valve 16, the first medium flowing through the third heat exchanger 17 has a temperature obtained before the pressure reduction by the second reducing valve 16. In contrast, since the second heat exchanger 15 in the first cycle 5 is connected on the downstream side with respect to the second reducing valve 16, the first medium flowing through the second heat exchanger 15 has a temperature that has dropped after the pressure reduction by the second reducing valve 16. Therefore, the temperature of the first medium in the third heat exchanger 17 is higher than the temperature of the first medium in the second heat exchanger 15. Accordingly, the temperature of the second medium in the third cycle 7 that has exchanged heat with the first medium in the third heat exchanger 17 is higher than the temperature of the second medium in the second cycle 6 that has exchanged heat with the first medium having a lower temperature in the second heat exchanger 15. This is the reason.

Note that if there are any nonoperating indoor units 34, the control apparatus 100 fully closes the flow-rate-adjusting valves 32 in the branch paths having the nonoperating indoor units 34, or switches the flow-path-switching valves 31 and 37 so as not to be connected to either of the second cycle 6 and the third cycle 7.

Here, the control apparatus 100 operates as follows. The control apparatus 100 controls the opening-degrees of the flow-rate-adjusting valves 32a to 32c such that the result of Equation (17) below becomes constant.

$$\text{(Temperature difference between entrance and exit)} = \text{(Detected value of temperature sensor 67)} - \text{(Detected value of temperature sensor 68)} \cdots (17)$$

The control apparatus 100 also controls the rotation speed of the first pump 21 such that the result of Equation (18) below becomes constant.

$$\text{(First pressure difference)} = \text{(Detected value of pressure sensor 55)} - \text{(Detected value of pressure sensor 54)} \cdots (18)$$

The control apparatus 100 also controls the rotation speed of the second pump 22 such that the result of Equation (19) below becomes constant.

$$\text{(Second pressure difference)} = \text{(Detected value of pressure sensor 57)} - \text{(Detected value of pressure sensor 56)} \cdots (19)$$

Thus, the second medium can be made to appropriately circulate through the indoor units 34.

As described above, since heating energy can be supplied at two different temperatures through the second heat exchanger 15 and the third heat exchanger 17 that are connected in series, the air-conditioning apparatus operates with an increased efficiency without any excessive compressing operation. Furthermore, since heating energy is supplied at two different temperatures with one heat source, interior air conditioning and perimeter air conditioning in building air conditioning or the like are realized simultaneously.

(6) Case of Heating-Main Cooling/Heating Operation

Now, a "heating-main operation" in which cooling and heating are performed simultaneously and the heating capacity is larger than the cooling capacity will be described with reference to Fig. 3.

In the air-conditioning apparatus 1, the flow-path switcher 10 is connected on the broken-line side. The first medium compressed by the compressor 9 and thus having a high pressure and a high temperature flows through the flow-path switcher 10, the second extension pipe 18, and the third heat exchanger 17. When the first medium flows through the third heat exchanger 17, heat is exchanged between the first cycle 5 and the third cycle 7, whereby the first medium supplies the heating energy thereof to the second medium and comes to have a high pressure and a low temperature. Subsequently, the pressure of the first medium is reduced by the second reducing valve 16, whereby the first medium comes to have a low pressure and a low degree of dryness. Subsequently, when the first medium flows through the second heat exchanger 15, heat is exchanged between the first cycle 5 and the second cycle 6, whereby the first medium supplies the cooling energy thereof to the second medium and comes to have a low pressure and two phases. Subsequently, although the first medium flows through the first reducing valve 14, since the first reducing valve 14 is fully open, the pressure loss is small. Subsequently, the first medium flows through the first extension pipe 13 into the first heat exchanger 11. Here, the first medium absorbs heat from the outside air supplied by the fan 12. Thus, the first medium comes to have a low pressure and a high degree of dryness. The first medium subsequently flows through the flow-path switcher 10 and the accumulator 19, and returns to the compressor 9. In general, in indoor units 34 intended for buildings, the amount of refrigerant is easier to become excessive in the heating operation than in the cooling operation depending on the sizes of the heat exchangers and the arrangement of the extension pipes and the reducing valves. Therefore, by storing this in the accumulator 19, the liquid refrigerant is prevented from being taken into the compressor 9, and the reliability is thus provided.

Here, the control apparatus 100 operates as follows. The control apparatus 100 controls the rotation speed of the compressor 9 such that the pressure at the discharge-side pressure sensor 52 becomes constant, and also controls the rotation speed of the outdoor-unit fan 12 such that the pressure at the intake-side pressure sensor 51 becomes constant, whereby the processing capacity of the first heat exchanger 11 is controlled.

The control apparatus 100 also controls the opening-degree of the second reducing valve 16 such that the result of Equation (20) below becomes constant.

(If the detected value of the pressure sensor 51 is at or above the critical pressure of the first medium)
(Exit temperature) of third heat exchanger 17 = (Detected value of temperature sensor 63)
(If the detected value of the pressure sensor 51 is below the critical pressure of the first medium)

$$\text{(Exit subcooling) of third heat exchanger 17} = \text{(Reduced saturation temperature at discharge-side pressure sensor 52)} - \text{(Detected value of temperature sensor 63)} \cdots (20)$$

The control apparatus 100 also makes the opening-degree of the first reducing valve 14 fully open.

Thus, appropriate cooling and heating capacities are realized in accordance with the number of operating indoor units 34.

In the third cycle 7 to which heating energy has been supplied from the first cycle 5 in the third heat exchanger 17, the second medium turns into relatively high temperature state, is circulated by the second pump 22, and flows into the branch paths 8b and 8c by the first flow-path-switching valves 31b and 31c. In the branch paths 8b and 8c, the flow rates of the second medium that is to flow therethrough are determined by the levels of resistances at the flow-rate-adjusting valves 32b and 32c. Subsequently, the second medium flows through the third extension pipes 33b and 33c into the indoor units 34b and 34c. In the indoor units 34b and 34c, the second medium supplies the heating energy thereof to the load side by exchanging heat with the room air with the aid of the indoor-unit fans 35b and 35c, whereby the second medium comes to have a low temperature. Subsequently, the second medium flows through the fourth extension pipes 36b and 36c and the second flow-path-switching valves 37b and 37c, is combined into the second combining path 43, and returns to the third heat exchanger 17.

In the second cycle 6 to which cooling energy has been supplied from the first cycle 5 in the second heat exchanger 15, the second medium has a relatively low temperature, is circulated by the first pump 21, and is allowed to flow into the branch path 8a by the first flow-path-switching valve 31a. In the branch path 8a, the flow rate of the second medium that is to flow therethrough is determined by the level of resistance at the flow-rate-adjusting valve 32a. Subsequently, the second medium flows through the third extension pipe 33a into the indoor unit 34a. In the indoor unit 34a, the second medium supplies the cooling energy thereof to the load side by exchanging heat with the room air with the aid of the indoor-unit fan 35a, whereby the second medium comes to have a high temperature. Subsequently, the second medium flows through the fourth extension pipe 36a, the second flow-path-switching valve 37a, and the first combining path 41, and returns to the second heat exchanger 15.

Here, the control apparatus 100 operates as follows. The control apparatus 100 controls the opening-degree of the flow-rate-adjusting valves 32a to 32c such that the result of Equation (21) below becomes constant.

$$\text{(Temperature difference between entrance and exit)} = \text{(Detected value of temperature sensor 67)} - \text{(Detected value of temperature sensor 68)} \cdots (21)$$

The control apparatus 100 also controls the rotation speed of the first pump 21 such that the result of Equation (22) below becomes constant.

$$\text{(First pressure difference)} = \text{(Detected value of pressure sensor 55)} -$$

$$\text{(Detected value of pressure sensor 54)} \cdots (22)$$

The control apparatus 100 also controls the rotation speed of the second pump 22 such that the result of Equation (23) below becomes constant.

$$\text{(Second pressure difference)} = \text{(Detected value of pressure sensor 57)}$$

$$- \text{(Detected value of pressure sensor 56)} \cdots (23)$$

Thus, the second medium can be made to appropriately circulate through the indoor units 34.

By the above operations, the cooling-only operation, the heating-only operation, and the mixed cooling/heating operation are realized efficiently.

Note that while the opening-degree of each of the first reducing valve 14 and the second reducing valve 16 can be adjusted, the pressure loss drop in the case where the reducing valve is fully open may be reduced by providing an on-off valve in parallel with the reducing valve, and opening the on-off valve when the reducing valve is fully open and closing the on-off valve when the reducing valve is not fully open. Furthermore, the second heat exchanger 15 and the third heat exchanger 17 may be any of a plate heat exchanger, a double-pipe heat exchanger, and a microchannel heat exchanger. However, if the direction of flow is limited as in the plate heat exchanger, a switching valve or the like may be provided.

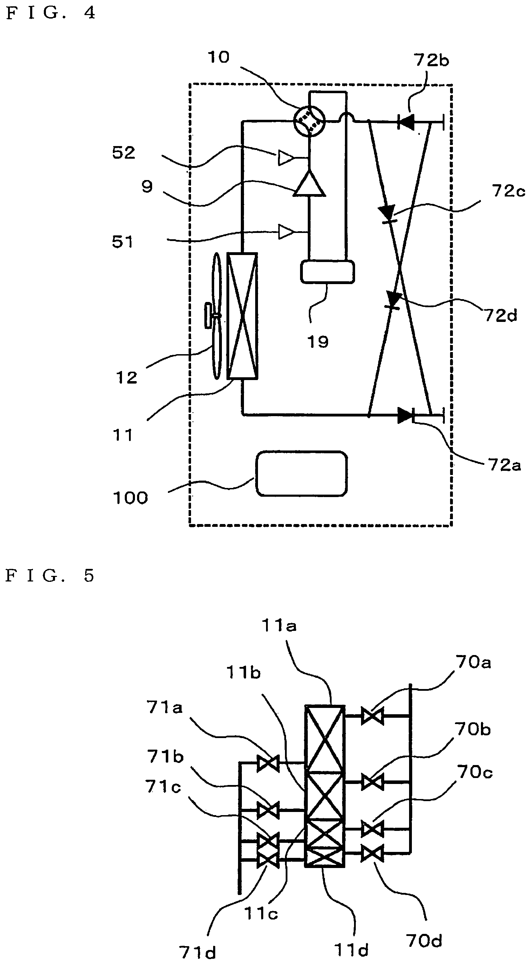

Furthermore, a bridge circuit such as the one illustrated in Fig. 4 may be provided in either of the outdoor unit and the relay unit. Thus, even if the direction of the flow-path switcher 10 is reversed during an operation, a refrigerant sound and the like can be suppressed, and the stability in controlling the first medium is maintained. That is, in the circuit illustrated in Fig. 1, the direction of flow of the first medium in the first cycle is reversed when the flow-path switcher 10 is switched; whereas, in Fig. 4, the direction of flow of the first medium in the first extension pipe 13, the first cycle in the relay unit 3, and the second extension pipe 18 is constant. Furthermore, the direction of flow of the second medium does not change in the second cycle and the third cycle. Although a refrigerant sound is generated when the direction of flow of the first medium is reversed, such a refrigerant sound is not generated in and near the room spaces illustrated in Fig. 6 because the direction of flow does not change near the room spaces (the refrigerant sound is generated in the heat source unit, naturally).

Furthermore, other than controlling the processing capacity of the first heat exchanger 11 by changing the rotation speed of the fan 12, separate first heat exchangers 11a to 11d may be provided in parallel as illustrated in Fig. 5, whereby the processing capacity may be changed on the basis of the number of heat exchangers. This is effective in a case where only one fan 12 is provided and in a case where the rotation speed cannot be reduced as a matter of reliability of the fan motor.

Here, reference numerals 70a to 70d and 71a to 71d denote switching valves, which enable the heat exchanger 11 to be used partially by being opened/closed in accordance with the combinations summarized in Table 1. Thus, the heat transfer area can be reduced, and the processing capacity of the heat exchanger can be changed.

Exemplary situations where the rotation speed of the fan motor cannot be reduced include a case where the fan motor is also responsible for the cooling of the control apparatus 100. Furthermore, in a case where the outside air is cool, heat needs to be exchanged even if the fan motor is stopped, because there is a temperature difference. In such a case, it is effective to adjust the heat transfer area as summarized in Table 1.

[Table 1]

| Processing capacity | Heat transfer area | Switching valve | | | | Heat exchanger | | | |
|---|---|---|---|---|---|---|---|---|---|
| | | 70a/71a | 70b/71b | 70c/71c | 70d/71d | 11a | 11b | 11c | 11d |
| Large ↓ Small | Large ↓ Small | Open | Open | Open | Open | Used | Used | Used | Used |
| | | Closed | Open | Open | Open | Not used | Used | Used | Used |
| | | Closed | Closed | Open | Open | Not used | Not used | Used | Used |
| | | Closed | Closed | Closed | Open | Not used | Not used | Not used | Used |

Because of the above configuration, the path of the first cycle is simple in any kinds of operations. In a so-called direct-expansion air-conditioning apparatus in which a heat source unit 2 and load-side units 4 are provided in one cycle, the circuit is intricate because of a plurality of indoor units 34, and the operation of controlling the first cycle is intricate because the operation is started and stopped repeatedly. Furthermore, the refrigerating machine oil, which is important in terms of the reliability of the compressor provided in the cycle, may be unevenly distributed or be accumulated in the cycle because such oil cannot be captured completely even with a high-performance oil separator. In contrast, in the present embodiment, since the first cycle has a simple path, the probability of occurrence of such uneven distribution or accumulation of the refrigerating machine oil is low, and sufficient reliability is provided. This is particularly effective in a case where the refrigerating machine oil is incompatible with the medium. Pumps to be used in the second cycle and the third cycle inherently have no possibility of discharging oil to the outside and are therefore highly reliable.

Furthermore, since the flow-rate-adjusting valves 32 are provided in the relay unit, even if any flow-rate-adjusting valves 32 fail, it is only necessary to perform a general recovery work (replacement or the like) for the relay unit alone. That is, since there is no need to do the recovery work for each of all the indoor units 34, the work is less cumbersome.

With the above configuration, since the second heat exchanger 15 has a larger heat-exchanging capacity than the third heat exchanger 17 in the cooling-only operation or the cooling-main cooling/heating operation, by connecting indoor units 34 having relatively large cooling capacities to the second heat exchanger 15 and indoor units 34 having relatively small cooling capacities to the third heat exchanger 17, a highly efficient air-conditioning apparatus with a simple configuration can be provided.

Furthermore, since the second heat exchanger 15 has a larger heat-exchanging capacity than the third heat exchanger 17, by connecting the indoor units 34 connected to flow-rate-adjusting valves whose opening-degrees are almost fully open to one of the second cycle and the third cycle that has a heat exchanger in which the first medium has a relatively high pressure, a highly efficient air-conditioning apparatus with a simple configuration can be provided.

Furthermore, if the indoor units 34 are all performing a cooling-only operation or heating-only operation and are not of the rated loads, the control apparatus 100 may operate such that one of the second cycle and the third cycle that has the smaller input is used, regardless of whether the air-conditioning apparatus is operated with only one cycle or with two cycles.

Furthermore, the flow-rate characteristics of the respective branches may be identified by the control apparatus 100 during a test operation, so that the characteristics can be reflected in the normal operation. Thus, the operation of controlling the switching can be performed more efficiently.

Furthermore, while the first medium is carbon dioxide, the first medium may be a flammable refrigerant, a low GWP (global warming potential) refrigerant, or a fluorocarbon refrigerant.

Note that the control apparatus 100 (rotation-speed-controlling means) sets the difference between the entrance-side pressure and the exit-side pressure of the first pump 21 or the second pump 22 in the second cycle 6 or the third cycle 7 to the target value, which is such a value that the opening-degree of one of the plurality of flow-rate-adjusting valves 32 provided in the second cycle 6 or the third cycle 7 and having the highest valve-opening-degree becomes the maximum. That is, by minimizing the flow rate from the first pump 21 or the second pump 22 and maximizing the opening-degree of the flow-rate-adjusting valve 32 whose valve-opening-degree is the highest, an efficient operation is realized.

Note that the exit-side pressure of the first pump 21 or the second pump 22 in the second cycle 6 or the third cycle 7 may be set to the target value.

Embodiment 2

Next, an operation according to Embodiment 2 will be described.

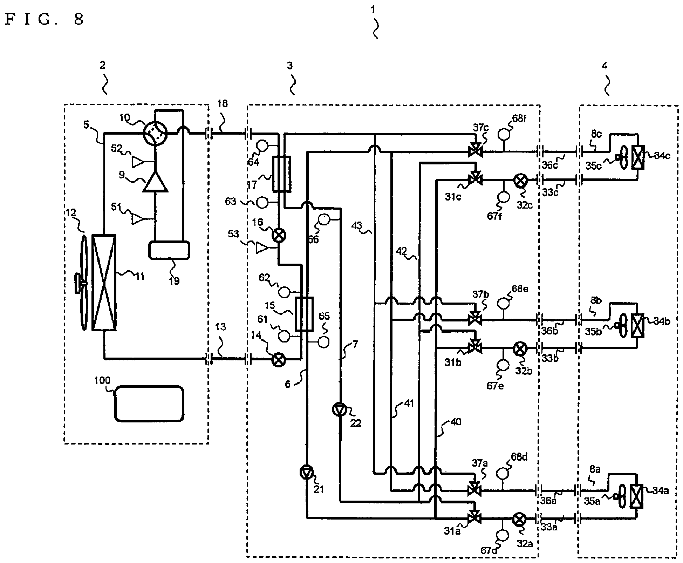

Fig. 8 is a circuit diagram illustrating an operation of an air-conditioning apparatus according to Embodiment 2 of the present invention. Note that descriptions of elements identical with those in Embodiment 1 are omitted. The configuration is the same as that illustrated in Figs. 1 to 3, except that the temperature sensors 67a to c and 68a to c provided for the load-side units 4 are substituted by temperature sensors 67d to f and 68d to f provided in the relay unit so that the temperatures of Medium 2 at those positions are measured, and that no pressure sensors are provided in the second cycle 6 and the third cycle 7.

Next, an operation of controlling the pump performed by the control apparatus 100 will be described in detail.

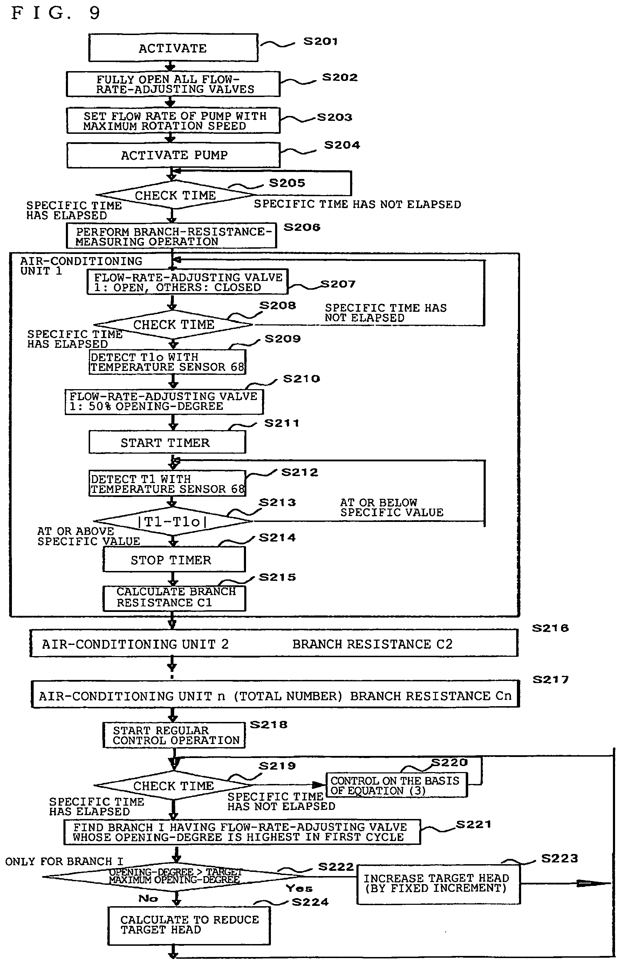

Fig. 9 is a flowchart illustrating the operational flow of the control apparatus 100 according to Embodiment 2. When the control apparatus 100 is first activated in Step S201, the control apparatus 100 fully opens all flow-rate-adjusting valves 32 in Step S202. Subsequently, the control apparatus 100 sets the rotation speed of the pump to the maximum in Step S203 and activates the pump in Step S204. Subsequently, after a specific period of time, which is a short time, has elapsed in Step S205, the control apparatus 100 starts a branch-resistance-measuring operation in Step S206. First, the control apparatus 100 performs the branch-resistance-measuring operation for a first indoor unit 34. That is, in Step S207, the control apparatus 100 opens the flow-path-switching valves 31 and 37 for the first indoor unit and closes the flow-path-switching valves 31 and 37 for the other indoor units 34 than the first indoor unit 34, thereby allowing the second medium to flow only into the first indoor unit 34. After a specific period of time has elapsed in Step S208, the control apparatus 100 acquires the detected value of the temperature sensor 68 in Step S209 and lets the detected value be T1o.

Subsequently, in Step S210, the control apparatus 100 lowers the opening-degree of the flow-rate-adjusting valve 32 of the first indoor unit 34 from fully open to 50%. Note that the value 50% is not a fixed value but only needs to be such a value as to significantly change the resistance of the flow-rate-adjusting valve 32. Subsequently, in Step S211, the control apparatus 100 starts time measurement. Subsequently, the control apparatus 100 acquires the detected value of the temperature sensor 68 and lets the detected value be T1 in Step S212, and compares the absolute value of (T1 - T1o) and a set value in Step S213. If the result of the comparison shows that the absolute value of (T1 - T1o) is below the set value, the operation returns to Step S212. If the absolute value of (T1 - T1o) is above the set value, the operation proceeds to Step S214, in which the time measurement is ended. Subsequently, the flow-path resistance of the first branch path is calculated in Step S215. In this calculation, the flow rate of the first branch path is estimated on the basis of the correlation equation between the head and flow rate of the pump, which is known in advance from the design, and the time period from when the opening-degree of the flow-rate-adjusting valve 32 is lowered until when the detected value of the temperature sensor 68 changes. From the estimated flow rate, the flow-path resistance can be calculated.

Subsequently, in Step S216, the control apparatus 100 performs the same operation for a second indoor unit 34 so as to calculate the flow-path resistance of a second branch path.

Furthermore, the control apparatus 100 repeats the same operation, including the operation for the last (n-th) indoor unit 34 in Step S217 so as to calculate the flow-path resistance of an n-th branch path. Thus, the required capacities of all the indoor units 34 are calculated, and the flow rate of the pump is therefore determined from the required capacities of all the indoor units 34.

Note that while Fig. 9 illustrates the case where the flow-path resistances of all branch paths are calculated on the basis of the first pump 21 alone, the calculation may be performed by dividing the group of branch paths between the first pump 21 and the second pump 22. In that case, the identification time can be shortened.

Subsequently, in Step S218, the control apparatus 100 starts a regular control operation and the operation of the first cycle 5. Subsequently, in Step S219, the control apparatus 100 judges whether or not a given period of time has elapsed, and if not, the control apparatus 100 controls the rotation speed of the pump in Step S220 such that the target head is realized on the basis of Equation (3). If the specific period of time has elapsed in Step S219, the control apparatus 100 finds in Step S221 the branch path (herein denoted by I) having the flow-rate-adjusting valve 32 whose opening-degree is the highest in the second cycle 6. If the opening-degree of the branch path I is found to be at or above the target maximum opening-degree in Step S222, the control apparatus 100 increases the target head in Step S223 because the head of the pump is low. The increment may be a fixed value. If the opening-degree of the branch path I is below the target maximum opening-degree in Step S223, the control apparatus 100 reduces the target head in Step S224 because the head of the pump is too high. The reduction method is as follows:

(New target head) = (Current target head)/(Calculated flow-path resistance of relevant branch path)×((Calculated flow-path resistance of relevant branch path) - ((Flow-path resistance of flow-rate-adjusting valve at current opening-degree) - (Flow-path resistance of flow-rate-adjusting valve at target maximum opening-degree)))

With such a configuration, no personnel for on-site adjustment are necessary, and minimization of the pump input is realized easily because the control apparatus 100 identifies the flow-path resistances and reflects the resistances in the control operation that is being performed. Furthermore, since the flow-path resistances are calculated by using the temperature sensors instead of using the pressure sensors, costs can be reduced. Furthermore, since the temperature sensors are provided in the relay unit 3 instead of being provided to the indoor units 34, even if any temperature sensors fail, it is only necessary to perform a general recovery work (replacement or the like) for the relay unit alone. That is, there is no need to do the recovery work for each of all the indoor units 34, and the ease of maintenance is therefore increased.

Reference Signs List

1 air-conditioning apparatus
2 heat source unit
3 relay unit
4, 4a to 4f load unit
5 first cycle
6 second cycle
7 third cycle
8a to 8c branch path
9 compressor
10 flow-path switcher
11, 11a to 11d first heat exchanger
12 fan
13 first extension pipe
14 first reducing valve
15 second heat exchanger
16 second reducing valve
17 third heat exchanger
18 second extension pipe
19 accumulator
21 first pump
22 second pump
31, 31a to 31c first flow-path-switching valve
32, 32a to 32c flow-rate-adjusting valve
33a to 33c third extension pipe
34, 34a to 34c indoor unit
35a to 35e indoor-unit fan
36a to 36c fourth extension pipe
37a to 37c second flow-path-switching valve
40 first branching path
41 first combining path
42 second branching path
43 second combining path
51 intake-side pressure sensor
52 discharge-side pressure sensor

53, 54, 55, 56, 57 pressure sensor

61, 62, 63, 64, 65, 66, 67, 67a to 67c, 68, 68a to 68c temperature sensor

70a to 70d, 71a to 71d on-off valve

72a to 72d check valve

90 building

91 room space

92 non-room space

100 control apparatus

**Claims**

1. An air-conditioning apparatus (1) comprising:

a first cycle (5) through which a first medium circulates;
a second cycle (6) through which a second medium circulates; and
a third cycle (7) through which the second medium circulates,
the first cycle (5) including a loop in which a compressor (9), a flow-path switcher (10) that switches the direction of flow of the first medium between forward and backward directions, a first heat exchanger (11), a first reducing valve (14), a second heat exchanger (15) in which the first medium circulating through the first cycle (5) and the second medium circulating through the second cycle (6) exchange heat therebetween, a second reducing valve (16), a third heat exchanger (17) in which the first medium circulating through the first cycle (5) and the second medium circulating through the third cycle (7) exchange heat therebetween are sequentially connected to one another with pipes,
the second cycle (6) including the second heat exchanger (15), a first pump (21) that drives the second medium, a first path that connects the second heat exchanger (15) and the first pump (21), and at least one first branch path (8a to 8c) having one end thereof connected to one end of the first path and the other end thereof connected to the other end of the first path,
the third cycle (7) including the third heat exchanger (17), a second pump (22) that drives the second medium, a second path that connects the third heat exchanger (17) and the second pump (22), and at least one second branch path having one end thereof connected to one end of the second path and the other end thereof connected to the other end of the second path,
wherein the second cycle and the third cycle share the same branch path (8a to 8c), which is the first or the second branch path, each of the first branch path and the second branch path includes flow-path-switching valves, a plurality of indoor units (34, 34a to 34c) and flow-rate-adjusting valves (32, 32a to 32c),
the flow-path-switching valves having a first flow-path-switching valve (31, 31a to 31c) that connects to one ends of each first branch path (8a to 8c) and second branch path and that switches so as to communicate with one of the second cycle (6) and the third cycle (7) and a second flow-path-switching valve (37a to 37c) that connects to the other ends of the first branch path and the second branch path and that switches so as to communicate with the same cycle out of the second cycle (6) and the third cycle (7) as the first flow-path-switching valve communicates with,
each indoor unit (34, 34a to 34c) performs a heating operation or a cooling operation using the second medium provided with heating energy, cooling energy or both of heating energy and cooling energy by the second heat exchanger (17) and the third heat exchanger (17), further comprising switching-controlling means that control the first flow-path-switching valve and the second flow-path-switching valve corresponding to each indoor unit (34, 34a to 34c) according to a temperature or an amount of the second medium which is required by the indoor unit (34, 34a to 34c), if all the indoor units (34) are performing a cooling operation or a heating operation;
wherein, if all the indoor units (34) are performing a cooling operation or a heating operation at different required temperatures in accordance with individual uses thereof, the indoor units (34) are divided into two groups of a high-temperature indoor unit (34) group and a low-temperature indoor unit group on the basis of the required temperatures, and
the switching-controlling means operates such that, in case of the cooling operation, the low-temperature indoor unit group connects to one of the cycles that has one of the second heat exchanger (15) and the third heat exchanger (17) in which the pressure of the first medium is lower, and such that, in case of the heating operation, the high-temperature indoor unit group connects to one of the cycles that has one of the second heat exchanger (15) and the third heat exchanger (17) in which the pressure of the first medium is higher.

2. The air-conditioning apparatus (1) of claim 1 wherein, if all the indoor units (34) are performing a cooling operation or a heating operation, the switching-controlling means operates such that an indoor unit (34) corresponding to the flow-rate-adjusting valve (32) whose opening-degree is almost fully open connects to one of the cycles in which the pressure of the first medium circulating in one of the second heat exchanger (15) or the third heat exchanger (17) is higher.

3. The air-conditioning apparatus (1) of claim 1 or 2 wherein, if all the indoor units (34) are performing a cooling operation or a heating operation, the switching-controlling means operates such that an indoor unit (34) whose required capacity is larger connects to one of the cycles in which the pressure of the first medium circulating in one of the second heat exchanger (15) or the third heat exchanger (17) is higher.

4. The air-conditioning apparatus (1) of any one of claims 1 to 3 wherein, if all the indoor units (34) are performing a cooling operation or a heating operation and are not of the rated loads, the switching-controlling means operates such that one of the second cycle (6) and the third cycle (7), which has a smaller input among the pumps, is used.

5. The air-conditioning apparatus (1) of any one of claims 1 to 4 wherein the flow-rate-adjusting means
identifies the respective flow path resistances of the branches during a test operation, and
if an opening-degree of a flow-rate-adjusting valve (32) which has the highest valve-opening-degree in the plurality of flow-rate-adjusting valves (32) provided in the second cycle (6) or the third cycle (7) is below a target maximum opening-degree, reduces a target head of the first pump (21) or the second pump (22) with the flow-path resistances.

6. The air-conditioning apparatus (1) of claim 5, further comprising a pressure sensor (51 to 57) and a flow-rate sensor, wherein the flow-rate-adjusting means identifies the flow-path resistance of a specific one of the plurality of branched paths in at least one of the second cycle (6) and the third cycle (7) on the basis of an output of the pressure sensor (51 to 57) or an output of the flow-rate sensor.

7. The air-conditioning apparatus (1) of claim 5, wherein
each branch path further comprises detecting means that detects a flow rate,
the flow-rate-adjusting means identifies the flow-path resistance of each branch path on the basis of detected values of the detecting means before and after changing the opening-degree of the flow-rate-adjusting valve (32) under certain amount flowing in each branch path, and
if an opening-degree of a flow-rate-adjusting valve (32) which has the highest valve-opening-degree in the plurality of flow-rate-adjusting valves (32) provided in the second cycle (6) or the third cycle (7) is below a target maximum opening-degree, reduces a target head of the first pump (21) or the second pump (22) with the flow-path resistance.

8. The air-conditioning apparatus (1) of any one of claims 1 to 6 further comprises a rotation-speed-controlling means, wherein the rotation-speed-controlling means sets the difference in pressures at an entrance and at an exit of the first pump (21) in the second cycle (6) or the second pump (22) in the third cycle (7) to a target value, which is such a value as to minimize flow rate from the first pump (21) or the second pump (22) and to maximize an opening-degree of a flow-rate-adjusting valve (32) which has the highest valve-opening-degree in the plurality of flow-rate-adjusting valves (32) provided in the second cycle (6) or the third cycle (7).

9. The air-conditioning apparatus (1) of any one of claims 1 to 5 and 7 wherein in order to make an opening-degree of a flow-rate-adjusting valve (32) that has the highest valve-opening-degree among the plurality of flow-rate-adjusting valves (32) in the second cycle (6) or the third cycle (7) fully open, the rotation-speed-controlling means controls the first pump (21) or the second pump (22) that is provided in one of the cycles, which has the flow-rate-adjusting valve (32) that has the highest valve-opening-degree.

10. The air-conditioning apparatus (1) of any one of claims 1 to 9 wherein the first medium is a natural refrigerant.

11. The air-conditioning apparatus (1) of any one of claims 1 to 9 wherein the first medium is a low-GWP refrigerant.

12. The air-conditioning apparatus (1) of any one of claims 1 to 9 wherein the first medium is a fluorocarbon refrigerant.

**Patentansprüche**

1. Klimaanlage (1), umfassend:

einen ersten Kreislauf (5), durch den ein erstes Medium zirkuliert;

einen zweiten Kreislauf (6), durch den ein zweites Medium zirkuliert; und

einen dritten Kreislauf (7), durch den das zweite Medium zirkuliert,

wobei der erste Kreislauf (5), eine Schleife aufweist, in der ein Verdichter (9), ein Strömungspfadschalter (10), der die Richtung der Strömung des ersten Mediums zwischen Vorwärts- und Rückwärtsrichtung schaltet, ein erster Wärmetauscher (11), ein erstes Reduzierungsventil (14), ein zweiter Wärmetauscher (15), in dem das erste Medium, zirkulierend durch den ersten Kreislauf (5), und das zweite Medium, zirkulierend durch den zweiten Kreislauf (6), dazwischen Wärme austauschen, ein zweites Reduzierungsventil (16), ein dritter Wärmetauscher (17), in dem das erste Medium, zirkulierend durch den ersten Kreislauf (5), und das zweite Medium, zirkulierend durch den dritten Kreislauf (7), dazwischen Wärme austauschen, mittels Leitungen nacheinander miteinander verbunden sind,

der zweite Kreislauf (6) den zweiten Wärmetauscher (15), eine erste Pumpe (21), die das zweite Medium antreibt, einen ersten Pfad, der den zweiten Wärmetauscher (15) und die erste Pumpe (21) verbindet, und zumindest einen ersten Zweigpfad (8a bis 8c), aufweisend ein Ende, das mit einem Ende des ersten Pfades verbunden ist, und dessen anderes Ende mit dem anderen Ende des ersten Pfades verbunden ist, aufweist,

der dritte Kreislauf (7) den dritten Wärmetauscher (17), eine zweite Pumpe (22), die das zweite Medium antreibt, einen zweiten Pfad, der den dritten Wärmetauscher (17) und die zweite Pumpe (22) verbindet, und zumindest einen zweiten Zweigpfad, aufweisend ein Ende, das mit einem Ende des zweiten Pfades verbunden ist, und dessen anderes Ende mit dem anderen Ende des zweiten Pfades verbunden ist, aufweist,

wobei der zweite Kreislauf und der dritte Kreislauf den gleichen Zweigpfad (8a bis 8c) teilen, der der erste oder der zweite Zweigpfad ist, wobei jeder von dem ersten Zweigpfad und dem zweiten Zweigpfad Strömungspfadschaltventile, eine Vielzahl von Inneneinheiten (34, 34a bis 34c) und Strömungsratenanpassungsventile (32, 32a bis 32c) aufweist,

die Strömungspfadschaltventile ein erstes Strömungspfadschaltventil (31, 31a bis 31c), das mit einem Ende jedes ersten Zweigpfades (8a bis 8c) und zweiten Zweigpfades verbunden ist und das schaltet, um mit einem von dem zweiten Kreislauf (6) und dem dritten Kreislauf (7) zu kommunizieren, und ein zweites Strömungspfadschaltventil (37a bis 37c), das mit den anderen Enden des ersten Zweigpfades und des zweiten Zweigpfades verbunden ist und das schaltet, um mit dem gleichen Kreislauf aus dem zweiten Kreislauf (6) und dem dritten Kreislauf (7) zu kommunizieren, mit dem das erste Strömungspfadschaltventil kommuniziert, aufweisen

jede Inneneinheit (34, 34a bis 34c) einen Erwärmungsbetrieb oder einen Kühlbetrieb unter Verwendung des zweiten Mediums durchführt, das durch den zweiten Wärmetauscher (17) und den dritten Wärmetauscher (17) mit Erwärmungsenergie, Kühlenergie oder mit beidem, Erwärmungsenergie und Kühlenergie, versorgt wird, ferner umfassend Schaltsteuerungsmittel, die das erste Strömungspfadschaltventil und das zweite Strömungspfadschaltventil steuern entsprechend jeder Inneneinheit (34, 34a bis 34c) gemäß einer Temperatur oder einer Menge des zweiten Mediums, die von der Inneneinheit (34, 34a bis 34c) benötigt wird, falls alle Inneneinheiten (34) einen Kühlbetrieb oder einen Erwärmungsbetrieb durchführen;

wobei, falls alle Inneneinheiten (34) einen Kühlbetrieb oder einen Erwärmungsbetrieb bei unterschiedlichen erforderlichen Temperaturen gemäß ihrer individuellen Nutzung durchführen, die Inneneinheiten (34) in zwei Gruppen einer Hochtemperatur-Inneneinheit-(34)-Gruppe und einer Niedertemperatur-Inneneinheit-Gruppe unterteilt werden auf Grundlage der erforderlichen Temperaturen, und

das Schaltsteuerungsmittel so arbeitet, dass im Falle des Kühlbetriebs die Niedertemperatur-Inneneinheit-Gruppe mit einem der Kreisläufe verbunden ist, der einen von dem zweiten Wärmetauscher (15) und dem dritten Wärmetauscher (17) aufweist, in dem der Druck des ersten Mediums niedriger ist, und so, dass im Falle des Erwärmungsbetriebs die Hochtemperatur-Inneneinheit-Gruppe mit einem der Kreisläufe verbunden ist, der einen von dem zweiten Wärmetauscher (15) und dem dritten Wärmetauscher (17) aufweist, in dem der Druck des ersten Mediums höher ist.

2. Klimaanlage (1) nach Anspruch 1, wobei, falls alle Inneneinheiten (34) einen Kühlbetrieb oder einen Erwärmungsbetrieb durchführen, das Schaltsteuerungsmittel so arbeitet, dass eine Inneneinheit (34) entsprechend dem Strömungsratenanpassungsventil (32), dessen Öffnungsgrad fast vollständig offen ist, mit einem der Kreisläufe verbunden ist, in dem der Druck des ersten Mediums, zirkulierend in einem von dem zweiten Wärmetauscher (15) oder dem dritten Wärmetauscher (17), höher ist.

3. Klimaanlage (1) nach Anspruch 1 oder 2, wobei, falls alle Inneneinheiten (34) einen Kühlbetrieb oder einen Erwärmungsbetrieb durchführen, das Schaltsteuerungsmittel so arbeitet, dass eine Inneneinheit (34), deren erforderliche Kapazität größer ist, mit einem der Kreisläufe verbunden ist, in dem der Druck des ersten Mediums, zirkulierend in einem von dem zweiten Wärmetauscher (15) oder dem dritten Wärmetauscher (17), höher ist.

**4.** Klimaanlage (1) nach einem der Ansprüche 1 bis 3, wobei, falls alle Inneneinheiten (34) einen Kühlbetrieb oder einen Erwärmungsbetrieb durchführen und nicht zu den Nennlasten gehören, das Schaltsteuerungsmittel so arbeitet, dass einer von dem zweiten Kreislauf (6) und dem dritten Kreislauf (7), der einen kleineren Eintrag unter den Pumpen hat, eingesetzt wird.

**5.** Klimaanlage (1) nach einem der Ansprüche 1 bis 4, wobei das Strömungsratenanpassungsmittel die jeweiligen Strömungspfadwiderstände der Zweige während eines Testbetriebs identifiziert, und falls ein Öffnungsgrad eines Strömungsratenanpassungsventils (32), das den höchsten Ventilöffnungsgrad in der Vielzahl der im zweiten Kreislauf (6) oder im dritten Kreislauf (7) vorgesehenen Strömungsratenanpassungsventile (32) aufweist, unter einem maximalen Zielöffnungsgrad liegt, einen Target-Kopf der ersten Pumpe (21) oder der zweiten Pumpe (22) mit den Strömungspfadwiderständen reduziert.

**6.** Klimaanlage (1) nach Anspruch 5, ferner umfassend einen Drucksensor (51 bis 57) und einen Strömungsratensensor, wobei das Strömungsratenanpassungsmittel den Strömungspfadwiderstand eines bestimmten der Vielzahl von verzweigten Pfaden in zumindest einem von dem zweiten Kreislauf (6) und dem dritten Kreislauf (7) identifiziert auf Grundlage einer Ausgabe des Drucksensors (51 bis 57) oder einer Ausgabe des Strömungsratensensors.

**7.** Klimaanlage (1) nach Anspruch 5, wobei jeder Zweigpfad ferner ein Erfassungsmittel umfasst, das eine Strömungsrate erfasst, wobei das Strömungsratenanpassungsmittel den Strömungsratenwiderstand jedes Zweigpfades erfasst auf Grundlage der erfassten Werte des Erfassungsmittels vor und nach Änderung des Öffnungsgrades des Strömungsratenanpassungsventils (32) unter einer bestimmten in jedem Zweigpfad strömenden Menge, und falls ein Öffnungsgrad eines Strömungsratenanpassungsventils (32), das den höchsten Ventilöffnungsgrad in der Vielzahl der im zweiten Kreislauf (6) oder im dritten Kreislauf (7) vorgesehenen Strömungsratenanpassungsventile (32) aufweist, unter einem maximalen Zielöffnungsgrad liegt, einen Target-Kopf der ersten Pumpe (21) oder der zweiten Pumpe (22) mit dem Strömungspfadwiderstand reduziert.

**8.** Klimaanlage (1) nach einem der Ansprüche 1 bis 6, ferner umfassend ein Drehgeschwindigkeitssteuerungsmittel, wobei das Drehgeschwindigkeitssteuerungsmittel die Differenzen in Drücken an einem Eingang und an einem Ausgang der ersten Pumpe (21) im zweiten Kreislauf (6) oder der zweiten Pumpe (22) im dritten Kreislauf (7) auf einen Zielwert einstellt, der ein Wert ist, um die Strömungsrate von der ersten Pumpe (21) oder der zweiten Pumpe (22) zu minimieren und einen Öffnungsgrad eines Strömungsratenanpassungsventils (32), das den höchsten Ventilöffnungsgrad in der Vielzahl von Strömungsratenanpassungsventilen (32) aufweist, die im zweiten Kreislauf (6) oder dem dritten Kreislauf (7) vorgesehen sind, zu maximieren.

**9.** Klimaanlage (1) nach einem der Ansprüche 1 bis 5 und 7, wobei, um einen Öffnungsgrad eines Strömungsratenanpassungsventils (32), das den höchsten Ventilöffnungsgrad unter der Vielzahl von Strömungsratenanpassungsventilen (32) aufweist, im zweiten Kreislauf (6) oder im dritten Kreislauf (7) vollständig geöffnet zu machen, das Drehgeschwindigkeitssteuerungsmittel die erste Pumpe (21) oder die zweite Pumpe (22), die in einem der Kreisläufe vorgesehen ist, der das Strömungsratenanpassungsventil (32) aufweist, das den höchsten Ventilöffnungsgrad aufweist, steuert.

**10.** Klimaanlage (1) nach einem der Ansprüche 1 bis 9, wobei das erste Medium ein natürliches Kältemittel ist.

**11.** Klimaanlage (1) nach einem der Ansprüche 1 bis 9, wobei das erste Medium ein Kältemittel mit niedrigem GWP-Wert ist.

**12.** Klimaanlage (1) nach einem der Ansprüche 1 bis 9, wobei das erste Medium ein Fluorkohlenstoff-Kühlmittel ist.

**Revendications**

**1.** Appareil de conditionnement d'air (1) comprenant :

un premier cycle (5) au cours duquel un premier milieu circule ;
un second cycle (6) au cours duquel un second milieu circule ; et
un troisième cycle (7) au cours duquel le second milieu circule,
le premier cycle (5) comprenant une boucle dans laquelle un compresseur (9), un commutateur (10) qui commute la direction d'écoulement du premier milieu entre une direction avant et une direction arrière, un premier échangeur thermique (11), un premier détendeur (14), un second échangeur thermique (15) dans lequel le premier milieu qui circule lors du premier cycle (5) et le second milieu qui circule lors du second cycle (6) échangent de la chaleur entre eux, un second détendeur (16), et un troisième échangeur thermique (17) dans lequel le premier milieu qui circule lors du premier cycle (5) et le second milieu qui circule lors du troisième cycle (7) échangeur de la chaleur entre eux sont reliés dans cet ordre les uns aux autres à l'aide de conduits,

le second cycle (6) comprenant le second échangeur thermique (15), une première pompe (21) qui entraîne le second milieu, un premier trajet qui relie le second échangeur thermique (15) et la première pompe (21), et au moins un premier trajet de dérivation (8a à 8c) ayant une extrémité reliée à une extrémité du premier trajet et l'autre extrémité reliée à l'autre extrémité du premier trajet,

le troisième cycle (7) comprenant le troisième échangeur thermique (17), une seconde pompe (22) qui entraîne le second milieu, un second trajet qui relie le troisième échangeur thermique (17) et la seconde pompe (22), et au moins un second trajet de dérivation ayant une extrémité reliée à une extrémité du second trajet et l'autre extrémité reliée à l'autre extrémité du second trajet,

dans lequel le second cycle et le troisième cycle partagent le même trajet de dérivation (8a à 8c), qui est le premier ou le second trajet de dérivation, chacun du premier trajet de dérivation et du second trajet de dérivation comprend des détendeurs de trajet d'écoulement, une pluralité d'unités d'intérieur (34, 34a à 34c) et des soupapes de régulation du débit (32, 32a à 32c),

les soupapes de commutation de trajet d'écoulement ayant une première soupape de commutation de trajet d'écoulement (31, 31a à 31c) qui est reliée aux extrémités de chaque premier trajet de dérivation (8a à 8c) et second trajet de dérivation et qui se déclenche de façon à communiquer avec l'un du second cycle (6) et du troisième cycle (7), et une seconde soupape de commutation de trajet d'écoulement (37a à 37c) qui est reliée aux autres extrémités du premier trajet de dérivation et du second trajet de dérivation et qui se déclenche de façon à communiquer avec le même cycle, parmi le second cycle (6) et le troisième cycle (7), que celui avec lequel communique la première soupape de commutation de trajet d'écoulement,

chaque unité d'intérieur (34, 34a à 34c) exécute une opération de chauffage ou une opération de refroidissement à l'aide du second milieu fourni avec une énergie de chauffage, une énergie de refroidissement ou une énergie de chauffage et une énergie de refroidissement par le second échangeur thermique (17) et le troisième échangeur thermique (17), comprenant en outre

un moyen de contrôle de commutation qui contrôle la première soupape de commutation de trajet d'écoulement et la seconde soupape de commutation de trajet d'écoulement correspondant à chaque unité d'intérieur (34, 34a à 34c) selon une température ou une quantité du second milieu qui est requise par l'unité d'intérieur (34, 34a à 34c), si toutes les unités d'intérieur (34) exécutent une opération de refroidissement ou une opération de chauffage ;

dans lequel, si toutes les unités d'intérieur (34) exécutent une opération de refroidissement ou une opération de chauffage à différentes températures requises selon les utilisations individuelles de celles-ci, les unités d'intérieur (34) sont divisées en deux groupes composés d'un groupe d'unités d'intérieur à haute température (34) et d'un groupe d'unités d'intérieur à basse température sur la base des températures requises, et

le moyen de contrôle de commutation fonctionne de sorte que, en cas d'opération de refroidissement, le groupe d'unités d'intérieur à basse température se connecte à l'un des cycles qui possède l'un du second échangeur thermique (15) et du troisième échangeur thermique (17) dans lequel la pression du premier milieu est plus faible, et de sorte que, en cas d'opération de chauffage, le groupe d'unités d'intérieur à haute température se connecte à l'un des cycles qui possède l'un du second échangeur thermique (15) et du troisième échangeur thermique (17) dans lequel la pression du premier milieu est plus élevée.

2. Appareil de conditionnement d'air (1) selon la revendication 1, dans lequel, si toutes les unités d'intérieur (34) exécutent une opération de refroidissement ou une opération de chauffage, le moyen de contrôle de commutation fonctionne de sorte qu'une unité d'intérieur (34) correspondant à la soupape de régulation de débit (32) dont le degré d'ouverture est quasiment maximal se connecte à l'un des cycles dans lequel la pression du premier milieu qui circule dans l'un du second échangeur thermique (15) ou du troisième échangeur thermique (17) est plus élevée.

3. Appareil de conditionnement d'air (1) selon la revendication 1 ou 2, dans lequel, si toutes les unités d'intérieur (34) exécutent une opération de refroidissement ou une opération de chauffage, le moyen de contrôle de commutation fonctionne de sorte qu'une unité d'intérieur (34) dont la capacité requise est plus élevée se connecte à l'un des cycles dans lequel la pression du premier milieu qui circule dans l'un du second échangeur thermique (15) ou du troisième échangeur thermique (17) est plus élevée.

4. Appareil de conditionnement d'air (1) selon l'une quelconque des revendications 1 à 3, dans lequel, si toutes les unités d'intérieur (34) exécutent une opération de refroidissement ou une opération de chauffage et ne sont pas à leur charge nominale, le moyen de contrôle de commutation fonctionne de sorte que l'un du second cycle (6) et du troisième cycle (7), qui présente une admission réduite parmi les pompes, soit utilisé.

5. Appareil de conditionnement d'air (1) selon l'une quelconque des revendications 1 à 4, dans lequel le moyen de régulation de débit identifie les résistances de trajet d'écoulement respectives des dérivations pendant une opération de test, et
si un degré d'ouverture d'une soupape de régulation de débit (32) qui présente le degré d'ouverture le plus élevé parmi la pluralité de soupapes de régulation de débit (32) prévues dans le second cycle (6) ou le troisième cycle (7) est inférieur à un degré d'ouverture maximal cible, réduit une charge cible de la première pompe (21) ou de la seconde pompe (22) avec les résistances de trajet d'écoulement.

6. Appareil de conditionnement d'air (1) selon la revendication 5, comprenant en outre un capteur de pression (51 à 57) et un capteur de débit,
dans lequel le moyen de régulation de débit identifie la résistance de trajet d'écoulement de l'un de la pluralité de trajets dérivés dans au moins l'un du second cycle (6) et du troisième cycle (7) sur la base d'une sortie du capteur de pression (51 à 57) ou d'une sortie du capteur de débit.

7. Appareil de conditionnement d'air (1) selon la revendication 5, dans lequel
chaque trajet de dérivation comprend en outre un moyen de détection qui détecte un débit,
le moyen de régulation de débit identifie la résistance de trajet d'écoulement de chaque trajet de dérivation sur la base des valeurs détectées du moyen de détection avant et après avoir modifié le degré d'ouverture de la soupape de régulation de débit (32) sous une certaine quantité qui circule dans chaque trajet de dérivation, et
si un degré d'ouverture d'une soupape de régulation de débit (32) qui présente le degré d'ouverture le plus élevé parmi la pluralité de soupapes de régulation de débit (32) prévues dans le second cycle (6) ou le troisième cycle (7) est inférieur à un degré d'ouverture maximal cible, réduit une charge cible de la première pompe (21) ou de la seconde pompe (22) avec la résistance de trajet d'écoulement.

8. Appareil de conditionnement d'air (1) selon l'une quelconque des revendications 1 à 6, comprenant en outre un moyen de régulation de la vitesse de rotation, dans lequel le moyen de régulation de la vitesse de rotation définit la différence de pression au niveau d'une entrée et d'une sortie de la première pompe (21) lors du second cycle (6) ou de la seconde pompe (22) lors du troisième cycle (7) sur une valeur cible, qui est une valeur destinée à minimiser le débit depuis la première pompe (21) ou la seconde pompe (22) et à maximiser un degré d'ouverture d'une soupape de régulation de débit (32) qui présente le degré d'ouverture le plus élevé parmi la pluralité de soupapes de régulation de débit (32) prévues dans le second cycle (6) ou le troisième cycle (7).

9. Appareil de conditionnement d'air (1) selon l'une quelconque des revendications 1 à 5 et 7, dans lequel, afin de rendre maximal un degré d'ouverture d'une soupape de régulation de débit (32) qui présente le degré d'ouverture le plus élevé parmi la pluralité de soupapes de régulation de débit (32) dans le second cycle (6) ou le troisième cycle (7), le moyen de régulation de vitesse de rotation contrôle la première pompe (21) ou la seconde pompe (22) qui est prévue dans l'un des cycles qui possède la soupape de régulation de débit (32) qui présente le degré d'ouverture le plus élevé.

10. Appareil de conditionnement d'air (1) selon l'une quelconque des revendications 1 à 9, dans lequel le premier milieu est un réfrigérant naturel.

11. Appareil de conditionnement d'air (1) selon l'une quelconque des revendications 1 à 9, dans lequel le premier milieu est un réfrigérant à faible potentiel d'effet de serre.

12. Appareil de conditionnement d'air (1) selon l'une quelconque des revendications 1 à 9, dans lequel le premier milieu est un réfrigérant à base de fluorocarbure.

FIG. 1

FIG. 2

FIG. 3

F I G .  4

F I G .  5

FIG. 6

F I G . 7

ACTIVATE — S101

FULLY OPEN ALL
FLOW-RATE-ADJUSTING
VALVES — S102

SET FLOW RATE OF
PUMP WITH MAXIMUM
ROTATION SPEED — S103

ACTIVATE PUMP — S104

CHECK TIME — S105

SPECIFIC TIME
HAS ELAPSED          SPECIFIC TIME HAS NOT ELAPSED

PERFORM BRANCH-
RESISTANCE-MEASURING
OPERATION — S106

AIR-CONDITIONING
UNIT 1

FLOW-RATE-ADJUSTING
VALVE 1: OPEN, OTHERS
: CLOSED — S107

CHECK TIME — S108          SPECIFIC TIME HAS
NOT ELAPSED

SPECIFIC TIME
HAS ELAPSED

DETECT WITH
PRESSURE SENSORS — S109

S110

CALCULATE BRANCH
RESISTANCE C1          CALCULATE FLOW RATE AND
RESISTANCE FROM HEAD-TO-
FLOW-RATE RELATIONSHIP OF
PUMP AND DETECTED HEAD

AIR-CONDITIONING UNIT 2          BRANCH RESISTANCE C2 — S111

AIR-CONDITIONING UNIT n (TOTAL NUMBER) BRANCH
RESISTANCE Cn — S120

START REGULAR
CONTROL OPERATION — S121

CHECK TIME — S122          CONTROL ON THE
BASIS OF
EQUATION (3) — S123

SPECIFIC TIME
HAS ELAPSED          SPECIFIC TIME HAS
NOT ELAPSED

FIND BRANCH I HAVING FLOW-RATE-
ADJUSTING VALVE WHOSE OPENING-
DEGREE IS HIGHEST IN FIRST CYCLE — S124

ONLY FOR BRANCH I

OPENING-DEGREE >TARGET
MAXIMUM OPENING-
DEGREE — S125          Yes          INCREASE TARGET
HEAD (BY FIXED
INCREMENT) — S126

No          S127

CALCULATE TO
REDUCE
TARGET HEAD

FIG. 8

# F I G. 9

**REFERENCES CITED IN THE DESCRIPTION**

**Patent documents cited in the description**

- JP H0682110 A
- JP 2004053069 A
- EP 2428741 A1

- JP 59002832 A
- JP 2007183045 A
- JP 2004317000 A